# EUROPEAN PATENT APPLICATION

(11) **EP 4 752 695 A1**
(43) Date of publication of application: **03.06.2026**
(21) Application number: 24884131.4
(22) Date of filing: 14.08.2024
(51) Int. Cl.: G06F 3/04817, G06F 3/0484

(54) **DISPLAY METHOD FOR CONTROL CENTER INTERFACE, AND RELATED DEVICE**

(30) Priority: 03.11.2023 CN 202311466828; 29.12.2023 CN 202311868471
(71) Applicant: Honor Device Co., Ltd., Shenzhen, Guangdong 518040 (CN)
(72) Inventor: XUE, Yuan, Shenzhen, Guangdong 518040 (CN)
(74) Representative: Goddar, Heinz J.
(86) International application number: PCT/CN2024/112193
(87) International publication number: WO 2025/092124

(57) **Abstract**

Embodiments of the present application provide a display method for an interface of a control center, and a related device. The method includes: in different preset scenarios and in a third menu area of an interface of a control center, recommending display of shortcut buttons corresponding to the preset scenarios: specifically, in a first scenario, in response to a first operation, displaying an interface of a control center, and displaying a first button in a target area, where the button includes: a shortcut button that conforms to a use habit of a user in the first scenario among the plurality of shortcut buttons; and in a second scenario, in response to the first operation, displaying the interface of the control center, and displaying a second button in the target area, where the second scenario is different from the first scenario, and the second button includes: a shortcut button that conforms to a use habit of the user in the second scenario among the plurality of shortcut buttons. In this way, the association between the shortcut buttons and the preset scenarios is strong, and the use habits of the users are met, thereby improving utilization of the shortcut buttons in the third menu area, and improving intelligence of a user product.

## Description

This application claims priority to Chinese Patent Application No. 202311466828.1, filed with the Chinese Patent Office on November 3, 2023 and entitled "CARD DISPLAY METHOD, AND RELATED DEVICE", and to Chinese Patent Application No. 202311868471.X, filed with the China National Intellectual Property Administration on December 29, 2023 and entitled "DISPLAY METHOD FOR INTERFACE OF CONTROL CENTER, AND RELATED DEVICE", which are incorporated herein by reference in their entireties.

### TECHNICAL FIELD

This application relates to the technical field of terminals, and in particular, to a display method for an interface of a control center, and a related device.

### BACKGROUND

An electronic device may provide a user with a plurality of convenient services. For example, when a pull-down operation is received, the electronic device may display an interface of a control center. A plurality of shortcut buttons such as a Bluetooth button, a screen recording button, and a mobile data button are displayed in the interface. The user may conveniently use a shortcut button on the interface of the control center, to enable a corresponding function of the electronic device.

In a possible implementation, the interface of the control center may include a plurality of areas, and different shortcut buttons are displayed in different areas. For example, a WLAN button and a Bluetooth button are displayed in a first menu area. A personal hotspot button, a screenshot button, a flashlight button, and a mute button are displayed in a second menu area. A screen recording button and a mobile data button are displayed in a third menu area. A volume adjustment button and a luminance adjustment button are displayed in a fourth menu area. The second menu area may be a relatively common shortcut button among the shortcut buttons. The third menu area may be a shortcut button recommended according to a use frequency of the user.

However, in a possible implementation, utilization of the user for using the shortcut button recommended in the third menu area is relatively low, affecting user experience.

### SUMMARY

Embodiments of the present application provide a display method for an interface of a control center, and a related device that are applied to the field of terminal technologies. Through detailed learning of habits and scenarios of using shortcut buttons by a user, a shortcut button with a relatively high use probability is recommended to the user in a third menu area, to create the mind of the user and improve user experience.

According to a first aspect, an embodiment of this application provides a display method for an interface of a control center. the method includes: in a first scenario, in response to a first operation, displaying an interface of a control center, and displaying one or more first buttons in a target area of the interface, where the control center is configured to manage a plurality of shortcut buttons, the interface of the control center is provided with a capability of displaying some shortcut buttons or all shortcut buttons of the plurality of shortcut buttons, and the one or more first buttons include: a shortcut button that conforms to a use habit of a user in the first scenario among the plurality of shortcut buttons; and in a second scenario, in response to the first operation, displaying the interface of the control center, and displaying one or more second buttons in the target area, where the second scenario is different from the first scenario, and the one or more second buttons include: a shortcut button that conforms to a use habit of the user in the second scenario among the plurality of shortcut buttons. In this way, an electronic device may recommend display of a shortcut button in a third menu area of the interface of the control center according to recognition of a scenario, and the association between the shortcut buttons and the preset scenarios is strong, and the use habits of the users are met; and in the preset scenario, the user has a relatively high probability of using the shortcut button, thereby improving utilization of the shortcut button in the third menu area, simplifying user operations, and improving user experience.

In a possible implementation, the shortcut button that conforms to the use habit of the user in the first scenario among the plurality of shortcut buttons includes at least one of the following: a shortcut button that is preset in the electronic device and that corresponds to the first scenario; a shortcut button whose use frequency in the first scenario is highest among the plurality of shortcut buttons; and/or, a shortcut button whose use frequency in a preset time in the first scenario is greater than a frequency threshold among the plurality of shortcut buttons. In this way, in a preset scenario, the electronic device may display, in the third menu area, a shortcut button conforming to the use habit of the user in the preset scenario, where an association between the preset scenario and the shortcut button is strong, and a probability that the user uses the shortcut function in the preset scenario is relatively high, thereby improving utilization of the shortcut button in the third menu area. In addition, the electronic device may continuously update, based on the use habit of the user, the shortcut button corresponding to the preset scenario, to better conform to the use habit of the user, and further improve utilization of the shortcut button in the third menu area, thereby improving user experience.

In a possible implementation, the method further includes: in the first scenario and the second scenario, in response to the first operation, displaying the interface of the control center, and displaying one or more third buttons in the target area, where the third button includes: one or more shortcut buttons whose use frequency is highest and that are obtained by sorting a use frequency of the first button in the first scenario and a use frequency of the second button in the second scenario together. In this way, when there is a conflict between preset scenarios in which the electronic device is located, the electronic device may filter out one or more shortcut buttons having highest use probabilities from a plurality of current scenarios according to a comprehensive ranking of the use frequencies of the shortcut buttons in the respective preset scenarios, thereby ensuring utilization of the shortcut button in the third menu area in the preset scenarios.

In a possible implementation, the first scenario includes any one of a low-battery scenario, an airport scenario, a dark-light scenario, a sleep scenario, a video scenario, a read scenario, a conference scenario, a family scenario, a company scenario, and a calculator scenario. In this way, in the foregoing preset scenario, the electronic device may provide a corresponding shortcut button according to the preset scenario. The use habit of the user is learned in detail through a scenario, so as to obtain a shortcut button that better conforms to the use habit of the user.

In a possible implementation, the method further includes: in a first time period, in response to the first operation, displaying the interface of the control center, and displaying one or more fourth buttons in the target area, where the electronic device is not in any one of the low-battery scenario, the airport scenario, the dark-light scenario, the sleep scenario, the video scenario, the read scenario, the conference scenario, the family scenario, the company scenario, and the calculator scenario; and the one or more fourth buttons include: a shortcut button that conforms to a use habit of the user in the first time period among the plurality of shortcut buttons; and in a second time period, in response to the first operation, displaying the interface of the control center, and displaying one or more fifth buttons in the target area, where the electronic device is not in any one of the low-battery scenario, the airport scenario, the dark-light scenario, the sleep scenario, the video scenario, the read scenario, the conference scenario, the family scenario, the company scenario, and the calculator scenario; and the first time period is different from the second time period; and the one or more fifth buttons include: a shortcut button that conforms to a use habit of the user in the second time period among the plurality of shortcut buttons. In this way, when the electronic device cannot recommend a shortcut button according to a preset scenario, the electronic device may recommend a shortcut button according to a time dimension, and can still learn the use habit of the user for shortcut buttons in detail, so as to provide, in the third menu area, a shortcut button better conforming to the use habit of the user, thereby improving utilization of the third menu area.

In a possible implementation, the method further includes: in a third time period, in response to the first operation, displaying the interface of the control center, and displaying one or more sixth buttons in the target area, where the electronic device is not in any one of the low-battery scenario, the airport scenario, the dark-light scenario, the sleep scenario, the video scenario, the read scenario, the conference scenario, the family scenario, the company scenario, and the calculator scenario; and the third time period is different from both the second time period and the first time period; and the one or more fifth buttons include: a screenshot button and/or a screen recording button. In this way, when there is no preset scenario or there is no use habit of the user in a current time period, the electronic device may provide a gadget button with a relatively wide range of use scenarios, thereby improving utilization of the shortcut button in the third menu area.

In a possible implementation, the method further includes: in a third scenario, in response to the first operation, displaying the interface of the control center, and displaying a seventh button and an eighth button in the target area, and displaying the seventh button and a ninth button in a first area of the interface, where the third scenario is different from both the first scenario and the second scenario, and the seventh button and the eighth button each include: a shortcut button that conforms to a use habit of the user in the third scenario among the plurality of shortcut buttons; and displaying the interface of the control center in response to an operation on the ninth button, where a plurality of rows of shortcut buttons are displayed in the first area, and shortcut buttons in a first row include the seventh button; and shortcut buttons from the first row to an N^{th} row include the eighth button, where N is a positive integer greater than 0. In this way, a plurality of manners of enabling a button are provided. For example, the user may use a shortcut button in the second menu area, and may also use a shortcut button in the third menu area, thereby enriching manners of using a shortcut button and improving user experience.

In a possible implementation, the method includes: in the low-battery scenario, in response to the first operation, displaying the interface of the control center, and displaying a tenth button in the target area, where the tenth button includes a low-battery mode button, where the low-battery scenario includes: a scenario in which a battery level of the electronic device is less than a battery level threshold. In this way, when the electronic device is in the low-battery scenario, the electronic device may recommend a corresponding shortcut button in the third menu area, to improve utilization of the shortcut button in the third menu area in the low-battery scenario.

In a possible implementation, the method includes: in the airport scenario, in response to the first operation, displaying the interface of the control center, and displaying an eleventh button in the target area, where the eleventh button includes an airplane mode button, where the airport scenario includes: a scenario in which the electronic device enters an airport geofence, and/or a scenario determined by the electronic device based on flight information of the user. In this way, when the electronic device is in the airport scenario, the electronic device may recommend a corresponding shortcut button in the third menu area, to improve utilization of the shortcut button in the third menu area in the airport scenario.

In a possible implementation, the method includes: in the dark-light scenario, in response to the first operation, displaying the interface of the control center, and displaying a twelfth button in the target area, where the twelfth button includes a flashlight button, a dark mode button, and/or an eye protection mode button, where the dark-light scenario includes: a scenario in which a luminance of the electronic device is less than a luminance threshold. In this way, when the electronic device is in the dark-light scenario, the electronic device may recommend a corresponding shortcut button in the third menu area, to improve utilization of the shortcut button in the third menu area in the dark-light scenario.

In a possible implementation, the method includes: in the sleep scenario, in response to the first operation, displaying the interface of the control center, and displaying a thirteenth button in the target area, where the thirteenth button includes a dark mode button, a do-not-disturb button, and/or an airplane mode button. In this way, when the electronic device is in the sleep scenario, the electronic device may recommend a corresponding shortcut button in the third menu area, to improve utilization of the shortcut button in the third menu area in the sleep scenario.

In a possible implementation, the video scenario includes a first video scenario and a second video scenario, and the first video scenario includes a scenario in which the electronic device runs a first-type video application; the second video scenario includes a scenario in which the electronic device runs a second-type video application; and an average playback duration of a video in the first-type video application is greater than an average playback duration of a video in the second-type video application, and the method includes: in the first video scenario, in response to the first operation, displaying the interface of the control center, and displaying a fourteenth button in the target area, where the fourteenth button includes an auto-rotation button, an AI subtitle button, a screenshot button, a screen recording button, and/or a screen projection button; and in the second video scenario, in response to the first operation, displaying the interface of the control center, and displaying a fifteenth button in the target area, where the fifteenth button includes an AI subtitle button, a screenshot button, and/or a screen recording button. In this way, when the electronic device is in the video scenario, the electronic device may recommend a corresponding shortcut button in the third menu area, to improve utilization of the shortcut button in the third menu area in the video scenario.

In a possible implementation, the read scenario includes a first read scenario and a second read scenario, and the first read scenario includes a scenario in which the electronic device runs a first-type read application; the second read scenario includes a scenario in which the electronic device runs a second-type read application; and an average article length of the first-type read application is greater than an average article length of read in the second-type read application, and the method includes: in the first read scenario, in response to the first operation, displaying the interface of the control center, and displaying a sixteenth button in the target area, where the sixteenth button includes an ebook mode button and/or a select-to-speak button; and in the second read scenario, in response to the first operation, displaying the interface of the control center, and displaying a seventeenth button in the target area, where the seventeenth button includes a select-to-speak button. In this way, when the electronic device is in the read scenario, the electronic device may recommend a corresponding shortcut button in the third menu area, to improve utilization of the shortcut button in the third menu area in the read scenario.

In a possible implementation, the method includes: in the conference scenario, in response to the first operation, displaying the interface of the control center, and displaying an eighteenth button in the target area, where the eighteenth button includes an AI subtitle button, a screenshot button, a screen recording button, and/or a screen projection button, where the conference scenario includes: a scenario in which the electronic device runs a conference application. In this way, when the electronic device is in the conference scenario, the electronic device may recommend a corresponding shortcut button in the third menu area, to improve utilization of the shortcut button in the third menu area in the conference scenario.

In a possible implementation, the method includes: in the family scenario, in response to the first operation, displaying the interface of the control center, and displaying one or more nineteenth buttons in the target area, where the one or more nineteenth buttons include: a shortcut button that conforms to a use habit of the user in the family scenario among the plurality of shortcut buttons; and in the company scenario, in response to the first operation, displaying the interface of the control center, and displaying one or more twentieth buttons in the target area, where the one or more twentieth buttons include: a shortcut button that conforms to a use habit of the user in the company scenario among the plurality of shortcut buttons. In this way, when the electronic device is in the family and/or company scenario, the electronic device may recommend a corresponding shortcut button in the third menu area, to improve utilization of the shortcut button in the third menu area in the family and/or company scenario.

In a possible implementation, the method includes: in the calculator scenario, in response to the first operation, displaying the interface of the control center, and displaying a twenty-first button in the target area, where the twenty-first button includes an auto-rotation button, where the calculator scenario includes: a scenario in which the electronic device runs a calculator application and a state of the auto-rotation button is an off state. In this way, when the electronic device is in the calculator scenario, the electronic device may recommend a corresponding shortcut button in the third menu area, to improve utilization of the shortcut button in the third menu area in the calculator scenario.

In a possible implementation, the method includes: in a fourth scenario, in response to the first operation, displaying the interface of the control center, and displaying one or more twenty-second buttons in the target area, where the twenty-second button is a shortcut button that is preset in the electronic device and that corresponds to the fourth scenario; and a use frequency of any shortcut button in the fourth scenario is less than or equal to the frequency threshold; and in the fourth scenario, in response to the first operation, displaying the interface of the control center, and displaying one or more twenty-third buttons in the target area, where the twenty-third button is a shortcut button whose use frequency in a preset time in the fourth scenario is greater than the frequency threshold among the plurality of shortcut buttons; and the twenty-third button is different from the twenty-second button, and the fourth scenario is different from the third scenario. In this way, the electronic device may constantly update a correspondence between a preset scenario and a shortcut button by learning the use habit of the user for the shortcut button, so that the shortcut button better conforms to the use habit of the user, thereby improving user experience.

According to a second aspect, an embodiment of this application provides an electronic device. The electronic device may also be referred to as a terminal device, terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a pad (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The electronic device includes: includes: a processor and a memory, where the memory stores computer-executable instructions; and the processor executes the computer-executable instructions stored in the memory to cause the electronic device to perform the method according to the first aspect.

According to a third aspect, embodiments of this application provide a computer-readable storage medium, where the computer-readable storage medium stores a computer program. When the computer program is executed by a processor, the method according to the first aspect is performed.

According to a fourth aspect, an embodiment of this application provides a computer program product. The computer program product includes a computer program, where the computer program, when run, causes a computer to perform the method according to the first aspect.

An embodiment of this application provides a chip system. The chip system includes at least one processor and a communication interface, where the communication interface is interconnected to the at least one processor by using a line, and the at least one processor is configured to run a computer program or an instruction, to perform the method according to the first aspect.

It should be understood that the technical solutions in the second aspect to the fifth aspect of this application correspond to the technical solutions in the first aspect of this application. Beneficial effect achieved in the aspects and corresponding feasible implementations are similar, and details are not described again.

### BRIEF DESCRIPTION OF DRAWINGS

FIG. 1 is a schematic diagram of an interface of a control center in a possible implementation;
FIG. 2 is a schematic structural diagram of an electronic device 100 according to an embodiment of this application;
FIG. 3 is a block diagram of a software structure of an electronic device 100 according to an embodiment of this application.
FIG. 4A, FIG. 4B, and FIG. 4C are schematic diagrams of an interface of a control center in a low-battery scenario according to an embodiment of this application;
FIG. 5 is a schematic diagram of an interface of a control center in an airport scenario according to an embodiment of this application;
FIG. 6A, FIG. 6B, and FIG. 6C are schematic diagrams of an interface of a control center in a dark-light scenario according to an embodiment of this application;
FIG. 7A, FIG. 7B, and FIG. 7C are schematic diagrams of an interface of a control center in a sleep scenario according to an embodiment of this application;
FIG. 8A, FIG. 8B, and FIG. 8C are schematic diagrams of an interface of a control center in a long video scenario according to an embodiment of this application;
FIG. 9A, FIG. 9B, and FIG. 9C are schematic diagrams of an interface of a control center in a long read scenario according to an embodiment of this application;
FIG. 10 is a schematic diagram of an interface of a control center in a conference scenario according to an embodiment of this application;
FIG. 11 is a schematic diagram of an interface of a control center in a family and/or company scenario according to an embodiment of this application;
FIG. 12 is a schematic diagram of updating a correspondence between a preset scenario and a shortcut button according to an embodiment of the present application;
FIG. 13 is a schematic diagram of an interface of a control center in different time periods according to an embodiment of this application;
FIG. 14 is a schematic diagram of a shortcut button linkage process according to an embodiment of this application;
FIG. 15 is a schematic diagram of an interface of a control center in a case that there is no preset scenario and there is no use habit of a user according to an embodiment of this application;
FIG. 16 is a schematic diagram of a shortcut button display rule in a case that there is a conflict between a plurality of preset scenarios according to an embodiment of this application;
FIG. 17 is a schematic flowchart of a display method for an interface of a control center according to an embodiment of this application;
FIG. 18 is a flowchart of internal interaction of an electronic device according to an embodiment of this application;
FIG. 19 is a flowchart of internal interaction of another electronic device according to an embodiment of this application;
FIG. 20 is a schematic flowchart of a display method for an interface of a control center according to an embodiment of this application;
FIG. 21 is a schematic diagram of a structure of a display apparatus for an interface of a control center according to an embodiment of this application.

### DESCRIPTION OF EMBODIMENTS

For ease of clearly describing the technical solutions in the embodiments of this application, in the embodiments of this application, a term such as "exemplary" or "for example" is used to represent giving an example, an illustration, or a description. Any embodiment or design solution described as "example" or "for example" in this application should not be construed as being preferred or advantageous over other embodiments or design solutions. Exactly, use of the term "exemplary" or "for example" is intended to present a concept in a specific manner.

In the embodiments of this application, "at least one" refers to one or more, and "a plurality of" refers to two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items" or a similar expression thereof indicates any combination of these items, including a single item or any combination of a plurality of items. For example, at least one of a, b, or c may represent "a", "b", "c", "a and b", "a and c", "b and c", or "a, b, and c", where a, b, and c may be singular or plural.

It should be noted that in the embodiments of this application, "when ..." may be an instantaneous occurrence time of a case, or may be a period of time after occurrence of a case, and this is not specifically limited in the embodiments of this application. In addition, a display interface provided by embodiments of this application is only an example, and more or less content may be further included in the display interface.

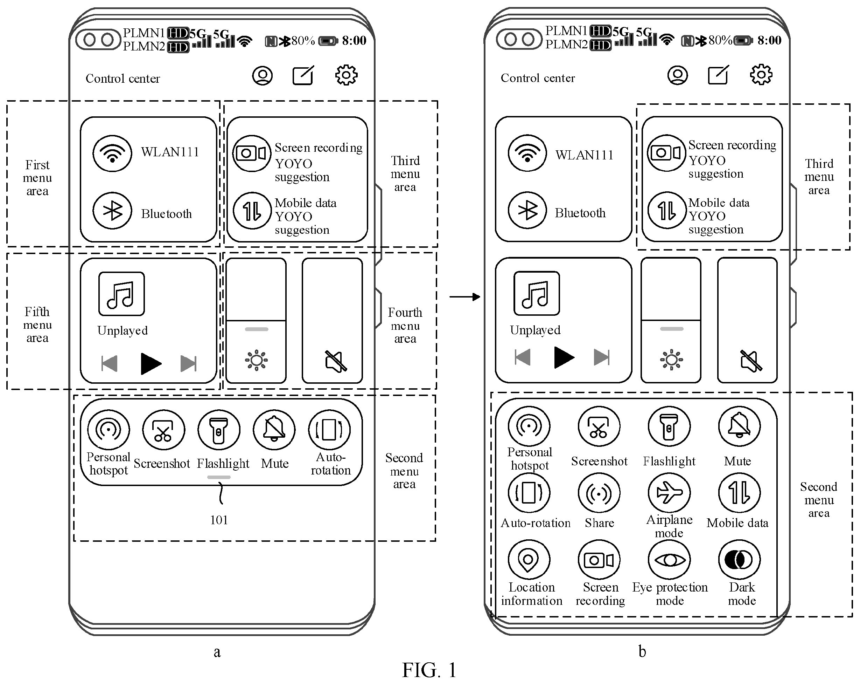

In a possible implementation, when an electronic device receives a pull-down operation from the top of a screen, the electronic device may display an interface of a control center, for example, an interface shown in a of FIG. 1. The interface of the control center may include a plurality of display areas, for example, a first menu area, a second menu area, a third menu area, a fourth menu area, and a fifth menu area.

In the first menu area, the electronic device displays a WLAN button and a Bluetooth button. The two buttons may be two shortcut buttons that are most frequently used. For example, the two buttons may be two buttons that are obtained based on big data and whose use frequency is highest for a user.

In the second menu area, the electronic device displays a personal hotspot button, a screenshot button, a flashlight button, a mute button, an auto-rotation button, and a more button 101. The second menu area may further display more buttons. For example, when the electronic device receives a trigger operation for the more button 101, the electronic device may display a plurality of shortcut buttons in an expanded manner, for example, display an interface shown in b of FIG. 1. In the interface shown in b of FIG. 1, the second menu area displays a personal hotspot button, a screenshot button, a flashlight button, a mute button, an auto-rotation button, a sharing button, an airplane mode button, a mobile data button, a location information button, a screen recording button, an eye protection mode button, and a dark mode button.

The shortcut buttons in the second menu area may be buttons that are set by default, for example, a plurality of frequently-used shortcut buttons obtained based on big data. The shortcut buttons in the second menu area may alternatively be buttons customized and adjusted by the user. For example, the user may edit a sequence of the shortcut buttons in the second menu area, and add a shortcut button to or delete a shortcut button from the second menu area, and the electronic device fixedly displays a shortcut button edited by the user. For example, the user edits a shortcut button in the second menu area, as shown in the interface in a of FIG. 1. Before the user edits a shortcut button in the second menu area next time, the shortcut buttons in the second menu area remain unchanged.

Similarly, in the second menu area of the interface shown in b of FIG. 1, another shortcut button may be displayed according to editing of the user, or the current shortcut buttons may be displayed in another sequence according to editing of the user.

In the third menu area (which may also be referred to as a suggestion card), the electronic device displays the screen recording button and the mobile data button. The shortcut buttons in the third menu area are recommended by the electronic device according to the use frequency of the user for the shortcut buttons. For example, if the electronic device learns that the user uses the screen recording button and the mobile data button most frequently, the screen recording button and the mobile data button are displayed in the third menu area.

In the fourth menu area, the electronic device may display the volume adjustment button and the luminance adjustment button. In the fifth menu area, the electronic device may display a played state of a music application. For example, the music application is in the played state and the music application is in an unplayed state.

It can be seen from the interface shown in b of FIG. 1 that, the user pushes out the button in some time periods in which the user does not need the button, the button is inconsistent with a current scenario, and is inconsistent with a habit of the user, and is not a quick gadget, which cannot be understood by the user, and user experience is poor.

This is because the shortcut button in the third menu area is recommended according to the use frequency of the user, and the shortcut button displayed in the third menu area does not change in a relatively long time. In some scenarios, difficulty in understanding of the user may be caused. For example, the user usually uses a do-not-disturb mode button in a working time. The electronic device detects that a use frequency of the do-not-disturb mode button is high, and displays the do-not-disturb mode button in the third menu area. However, the user rarely uses the do-not-disturb mode button in the evening, but the electronic device still displays the do-not-disturb mode button in the third menu area. In such a time period as the evening, utilization of the shortcut button in the third menu area is relatively low, affecting user experience.

In view of this, an embodiment of this application provides a display method for an interface of a control center, to learn a habit of using a shortcut button by a user in detail in a plurality of aspects, thereby improving utilization of the shortcut button in the third menu area. For example, a shortcut button is recommended according to learning of a scenario and a user habit. In a different scenario, the third menu area may provide shortcut buttons frequently used by the user in the scenario. Because the shortcut buttons have a relatively high matching degree to the scenario, a probability that the user uses the buttons is relatively high. In this way, the shortcut buttons recommended according to the scenario can better conform to a habit of the user for using the shortcut buttons, thereby improving accuracy and utilization of the shortcut buttons recommended in the third menu area, simplifying an operation of searching for a related shortcut button in the second menu area by the user, and improving user experience.

To help better understand this embodiment of this application, the following describes a structure of an electronic device in embodiments of this application.

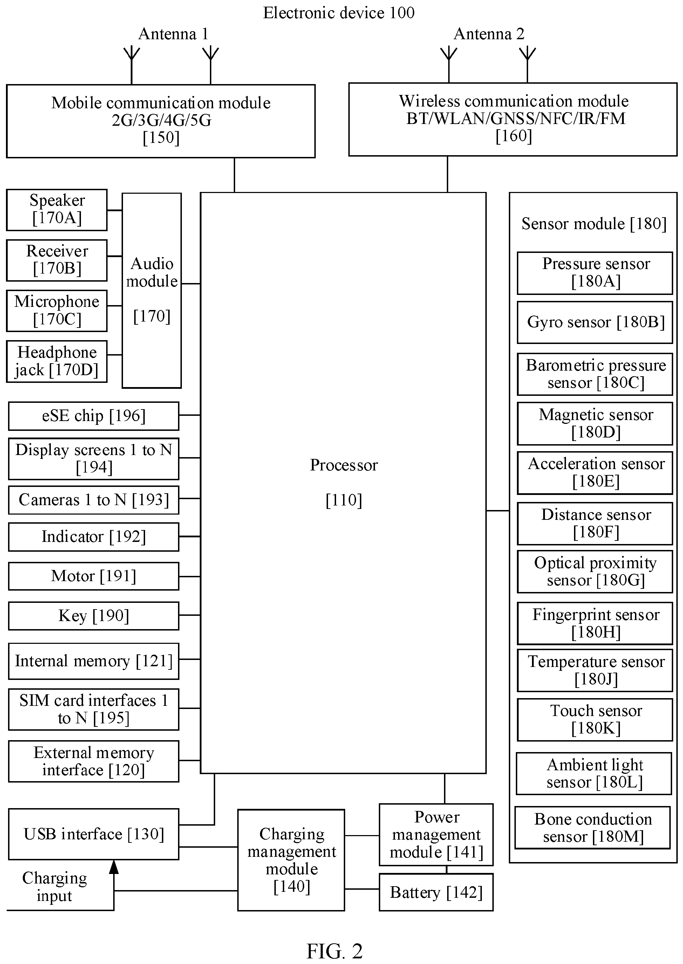

FIG. 2 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, an embedded secure element (embedded secure element, eSE) 196, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, schematic structures in embodiments of the disclosure do not constitute specific limitations to the electronic device 100. In some other embodiments of this application, the electronic device 100 may include more or fewer components than those shown in the figure, or some components may be combined, or some components may be split, or a different component deployment may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

A wireless communication function of the electronic device 100 may be implemented by using the antenna 1, the antenna 2, the mobile communication module 150, the wireless communication module 160, the modem processor, the baseband processor, and the like.

In some embodiments, in the electronic device 100, the antenna 1 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division a plurality of access (code division a plurality of access, CDMA), wideband code division a plurality of access (wideband code division a plurality of access, WCDMA), time-division code division a plurality of access (time-division code division a plurality of access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display screen 194, the application processor, and the like. The display screen 194 is configured to display an image, a video, and the like.

The internal memory 121 may be configured to store computer-executable program code, and the executable program code includes instructions. The internal memory 121 may include a program storage area and a data storage area. The program storage area may store an operating system, an application required by at least one function (such as a voice playing function and an image playing function), and the like. The data storage area may store data (such as audio data and an address book) created during use of the electronic device 100, and the like. In addition, the internal memory 121 may include a high-speed random access memory, and may further include a nonvolatile memory such as at least one magnetic disk storage device, a flash memory, or a universal flash storage (universal flash storage, UFS). The processor 110 performs various function applications and data processing of the electronic device 100 by running the instructions stored in the internal memory 121 and/or the instructions stored in the memory arranged in the processor.

The ambient light sensor 180L is configured to sense intensity of ambient light. The electronic device 100 may adaptively adjust luminance of the display screen 194 according to the perceived ambient light luminance. The ambient light sensor 180L may also be configured to automatically adjust a white balance during photographing. The ambient light sensor 180L may further cooperate with the optical proximity sensor 180G to detect whether the electronic device 100 is in a pocket to prevent an accidental touch.

A software system of the electronic device 100 may use a layered architecture, an event-driven architecture, a microkernel architecture, a microservice architecture, a cloud architecture, or the like. In this embodiment of this application, an Android system with a layered architecture is used as an example to describe the software structure of the electronic device 100.

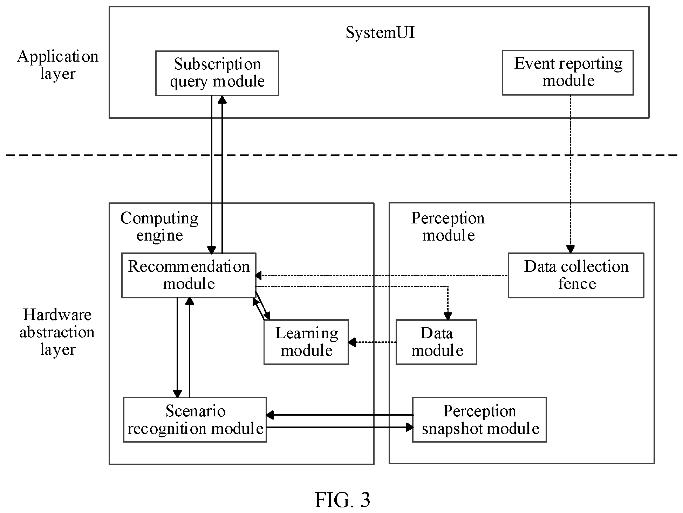

FIG. 3 is a block diagram of a software structure of the electronic device 100 according to an embodiment of this application.

In the layered architecture, the software is divided into several layers, and each layer has a clear role and task. The layers communicate with each other by using a software interface. In some embodiments, the Android system may include an application layer (applications), an application framework layer (application framework), a hardware abstract layer (hardware abstract layer, HAL), and a kernel layer (kernel). The kernel layer may be a drive layer.

The application layer may include a system user interface (systemUI).

The SystemUI is an application package at a system level, and the SystemUI is used for displaying status bar information, for example, icon display such as a battery, a wifi signal, and a 3G/4G signal; displaying a notification panel, such as a system message and a third-party application message; displaying a recent taskbar display panel, for example, displaying a recently used application after a recent task shortcut key is long-pressed; providing a screenshot service; and providing a wallpaper service and the like.

In this embodiment of this application, the SystemUI may include a subscription query module and an event reporting module. The subscription query module may be configured to subscribe to a shortcut button recommendation service from a recommendation module of a computing engine. After subscription, the subscription query module may query the recommendation module for information about the shortcut button recommended to be displayed in the third menu area, and perform control to display the shortcut button in the third menu area. The event reporting module may be configured to obtain a user click event. For example, when a click operation for a shortcut button is received, the event reporting module obtains information when the shortcut button is clicked, for example, a name, a location, and a switch state of the shortcut button.

The application framework layer provides an application programming interface (application programming interface, API) and a programming framework for applications at the application layer. The application framework layer includes some predefined functions.

The hardware abstraction layer may include a plurality of library modules and the like. The Android system may load a corresponding library module for device hardware, thereby enabling the application framework layer to access the device hardware. In this embodiment of this application, the hardware abstraction layer may include the computing engine and a perception module.

The computing engine may include the recommendation module, a learning mid-end, and a scenario recognition module. The recommendation module may be configured to recommend the shortcut button in the third menu area to the SystemUI according to a current scenario and/or a current time. The scenario recognition module is configured to recognize the current scenario. The electronic device may be provided with a plurality of preset scenarios, for example, a low-battery scenario, an airport scenario, and a dark-light scenario. The scenario recognition module may recognize these preset scenarios, and return a scenario recognition result to the recommendation module. The learning mid-end may be configured to learn a preference of a user for using a shortcut button, and establish and update a correspondence between a frequently used shortcut button of a user and a preset scenario, and/or a correspondence between a frequently used shortcut button of a user and a preset time interval.

The perception module may include a data collection fence, a data mid-end, and a perception snapshot module. The data collection fence is configured to separately communicate with the event reporting module of the SystemUI and the recommendation module of the computing engine. For example, the data collection fence obtains information about a shortcut button of the event reporting module, and transfers the information to the recommendation module. The data mid-end may receive data returned by the recommendation module, and transfer the data to the learning mid-end. For example, the data may include information about a shortcut button and scenario information. The perception snapshot module may establish a snapshot, for example, an airport snapshot, a family snapshot, or a company snapshot. The scenario recognition module may query the perception snapshot module for an airport scenario, a family scenario, a company scenario, and the like.

In this embodiment of this application, the computing engine and the perception module may alternatively be set at the application layer. This is not limited in this embodiment of this application.

The kernel layer is a layer between hardware and software. The kernel layer is configured to drive hardware, to enable the hardware to work. The kernel layer may include a display driver, a sensor driver, and the like. This is not limited in this embodiment of this application. In this embodiment of this application, the scenario recognition module may perform scenario recognition based on sensor data reported by the sensor driver. For example, the scenario recognition module may obtain data of an ambient light sensor, for example, a luminance value.

The following describes implementations of the display method for a control center according to this embodiment of this application with reference to FIG. 3.

In a possible implementation, after the subscription query module subscribes to the shortcut button recommendation service from the recommendation module, the subscription query module may query the recommendation module for a to-be-recommended shortcut button in the third menu area. The recommendation module queries the scenario recognition module for a current scenario, and after recognizing the current scenario, the scenario recognition module returns a scenario recognition result to the recommendation module. The recommendation module queries the learning mid-end for a shortcut button corresponding to the current scenario, and the learning mid-end queries for a corresponding shortcut button according to the current scenario and/or the current time, and returns information about the shortcut button to the recommendation module. The recommendation module returns the information about the shortcut button to the subscription query module. Optionally, when recognizing scenarios, the scenario recognition module may query the perception snapshot module to recognize some scenarios, such as an airport scenario, a family scenario, and a company scenario. The procedure may be, for example, a procedure indicated by a solid arrow in FIG. 3.

In another possible implementation, when a click operation for a shortcut button is received, the event reporting module obtains a click event, and transfers information about the shortcut button to the recommendation module through the data collection fence. The recommendation module obtains the information about the shortcut button, and queries the scenario recognition module for a current scenario, and after recognizing the current scenario, the scenario recognition module returns a scenario recognition result to the recommendation module. The recommendation module stores the information about the shortcut button and the scenario recognition result into the data mid-end, the data mid-end transfers the information about the shortcut button and the scenario recognition result to the learning mid-end, and the learning mid-end learns and updates the correspondence between a scenario and a shortcut button according to the information about the shortcut button and the scenario recognition result.

A correspondence between a preset scenario and a shortcut button of embodiments of this application is first described below with reference to scenarios.

Table 1 shows a correspondence between some preset scenarios and the shortcut buttons in the third menu area, as shown in Table 1:

**Table 1: Correspondence between the preset scenarios and the shortcut buttons in the third menu area**

| | | |
|---|---|---|
| Preset scenario | | Button recommended in the third menu area |
| Low-battery scenario | | Low-battery mode button |
| Airport scenario | | Airplane mode button |
| Dark-light scenario | | Flashlight button, dark mode button, or eye protection mode button |
| sleep scenario | | Dark mode button, do-not-disturb button, or airplane mode button |
| Video scenario | Long video scenario | Auto-rotation button, AI subtitle button, screenshot button, screen recording button, or screen projection button |
| | Short video scenario | AI subtitle button, screenshot button, or screen recording button |
| Read scenario | Long read scenario | Ebook mode button or select-to-speak button |
| | Short read scenario | Select-to-speak button |
| Conference scenario | | AI subtitle button, screenshot button, screen recording button, or screen projection button |
| Family or company scenario | | Button frequently used by a user |
| Calculator scenario | | Auto-rotation button |

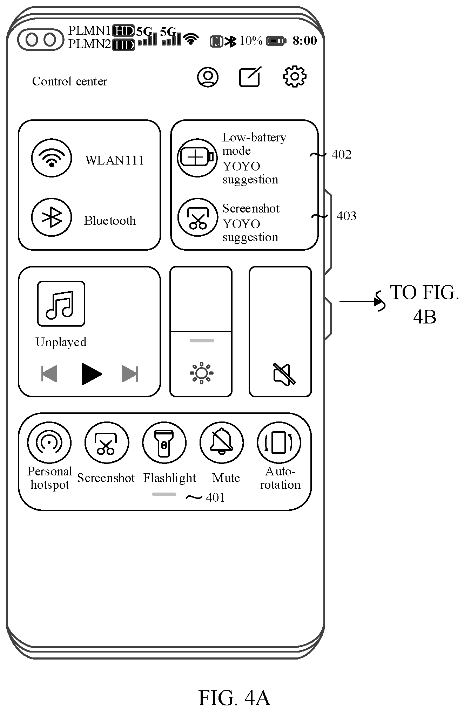

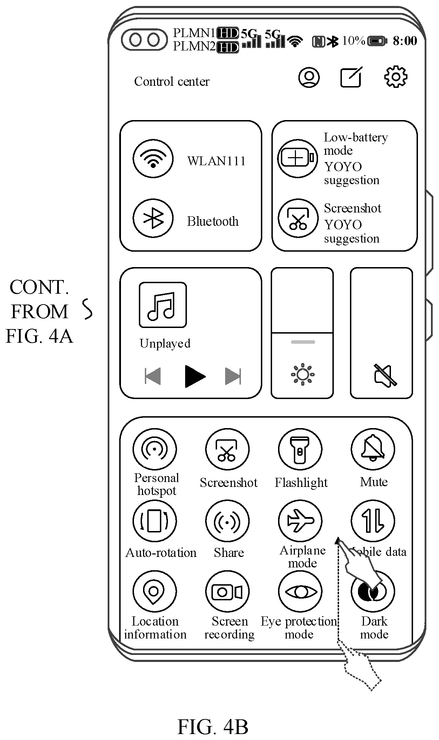

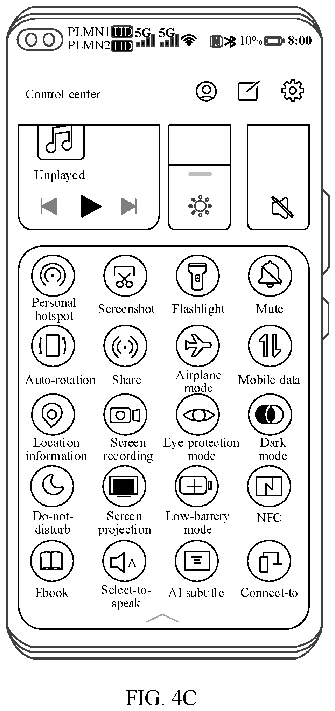

For example, the electronic device may perform scenario recognition. When a preset scenario is recognized, the electronic device may recommend display of a corresponding shortcut button in the third menu area. The foregoing correspondences between preset scenarios and shortcut buttons are described below with reference to FIG. 4A, FIG. 4B, and FIG. 4C to FIG. 11 respectively.

In FIG. 4A, FIG. 4B, and FIG. 4C, when detecting that a battery level of an electronic device is less than a battery level threshold, the electronic device determines that the electronic device is currently in a low-battery scenario, and the electronic device may recommend display of a low-battery mode button in a third menu area. For example, in the low-battery scenario, when the electronic device receives a slide-down operation, the electronic device may display an interface shown in FIG. 4A; and in the interface shown in FIG. 4A, the electronic device displays a low-battery mode button 402 in the third menu area. Optionally, prompt information, for example, YOYO suggestion, may be further displayed in the third menu area.

It may be understood that, when the battery level is relatively low, a reminder that the battery level is excessively low pops up from the electronic device, and a user may charge the electronic device or enable a low-battery mode (which may also be referred to as an energy saving mode and a power saving mode) when the battery level of the electronic device is relatively low. Therefore, in the low-battery scenario, a probability that the low-battery mode button is used is relatively high, and the electronic device may display the low-battery mode button in the third menu area, to improve utilization of the third menu area.

In the interface shown in FIG. 4A, a more button 401 is further displayed in a second menu area. When the electronic device receives a trigger operation for the more button 401, the electronic device may display an interface shown in FIG. 4B. In a second menu area of the interface shown in FIG. 4B, some shortcut buttons such as a personal hotspot button, a screenshot button, a flashlight button, a mute button, an auto-rotation button, a sharing button, an airplane mode button, a mobile data button, a location information button, a screen recording button, an eye protection mode button, and a dark mode button may be displayed.

In the interface shown in FIG. 4B, the electronic device may display more shortcut buttons based on a slide-up operation. For example, when the slide-up operation is received in the second menu area, the electronic device may display an interface shown in FIG. 4C. The interface shown in FIG. 4C may display more shortcut buttons, for example, a do-not-disturb button, a screen projection button, a low-battery button, an NFC button, an ebook mode button, a select-to-speak button, an AI subtitle button, and a connect-to button.

It may be understood that, when the user performs an operation of pulling down and starting a control center, the electronic device may display the interface shown in FIG. 4A. After the user clicks the more button 401, the electronic device may display the interface shown in FIG. 4B. After the user performs the slide-up, the electronic device may display the interface shown in FIG. 4C.

It can be seen that in a possible implementation, because the low-battery button in the third menu area has no correspondence with the low-battery scenario, in the low-battery scenario, the electronic device may not display the low-battery mode button 402 in the third menu area, and the user needs to operate twice to find the low-battery mode button in the interface shown in FIG. 4C. However, in this embodiment of this application, in the low-battery scenario, the electronic device may recommend display of the low-battery button 402 in the third menu area, and the user does not need to search for the low-battery button in a plurality of shortcut buttons in the interface shown in FIG. 4C, thereby simplifying user operations and improving user experience.

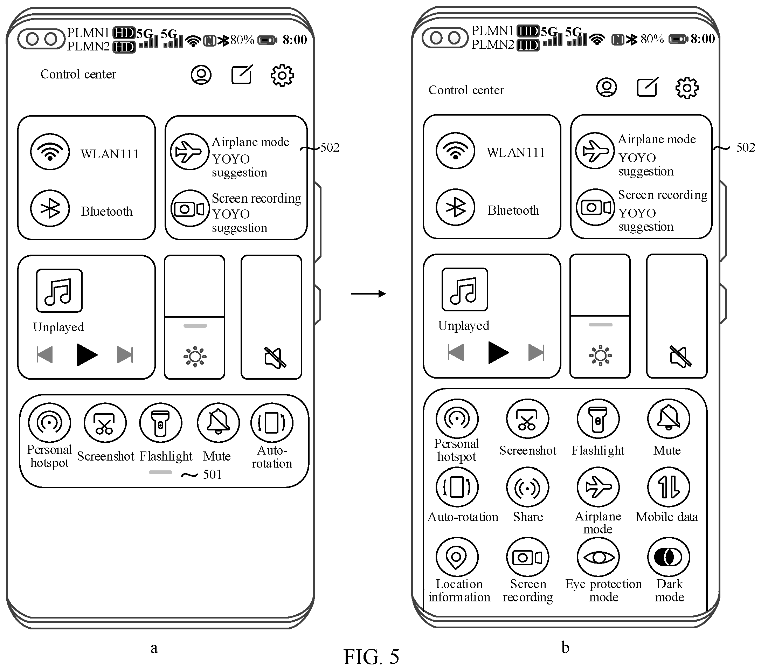

In FIG. 5, when an electronic device enters an airport geofence, and/or detects flight information of a user, the electronic device may determine that the electronic device is in an airport scenario, and the electronic device may recommend display of an airplane mode button in a third menu area. For example, in the airport scenario, when the electronic device receives a slide-down operation, the electronic device may display an interface shown in a of FIG. 5; and in the interface shown in a of FIG. 5, the electronic device displays an airplane mode button 502 in the third menu area.

Optionally, in the interface shown in a of FIG. 5, a more button 501 may be displayed in a second menu area. When receiving a trigger operation for the more button 501, the electronic device may display an interface shown in b of FIG. 5. In the interface shown in b of FIG. 5, the electronic device may display an airplane mode button 502 in the third menu area, and the electronic device may display an airplane mode button in the second menu area. In this way, because a location of the shortcut button in the second menu area is relatively fixed, the user may find the airplane mode button in the second menu area according to a use habit, and use the airplane mode button; and the user may alternatively use the airplane mode button 502 in the third menu area. In this way, the user is provided with a plurality of options for enabling the shortcut button, thereby improving user experience.

In the foregoing preset scenario, the preset scenario may correspond to a shortcut button. For example, a low-battery scenario corresponds to a low-battery mode button, and an airport scenario corresponds to an airplane mode button. The third menu area can display one or more shortcut buttons. When the third menu area can display a plurality of shortcut buttons, the electronic device is in a preset scenario, and in addition to displaying a function corresponding to the preset scenario, other shortcut buttons may be further displayed in the third menu area. For example, in the interface shown in FIG. 4A, the third menu area further includes a screenshot button 403. The other shortcut buttons may be some shortcut switch gadgets, for example, a screenshot button, a screen recording button, a calculator button, a timer button, and a recorder button. The other shortcut buttons may alternatively be some common buttons, for example, a screen recording button and a mobile data button. This is not limited in this embodiment of this application.

Some preset scenarios may correspond to a plurality of shortcut buttons. The following describes an interface of a control center in such scenarios.

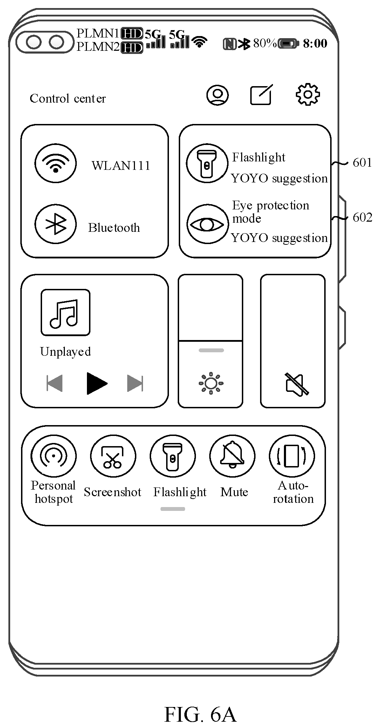

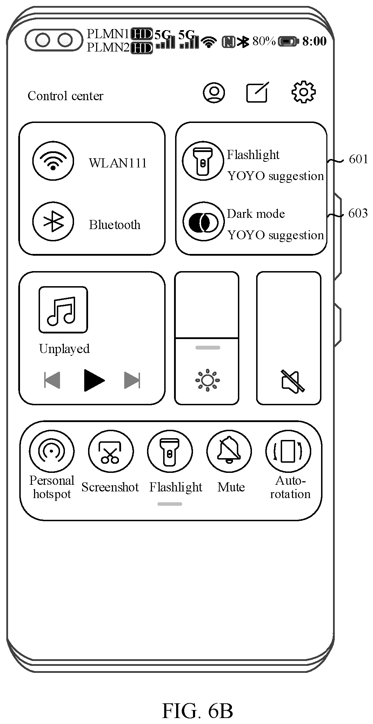

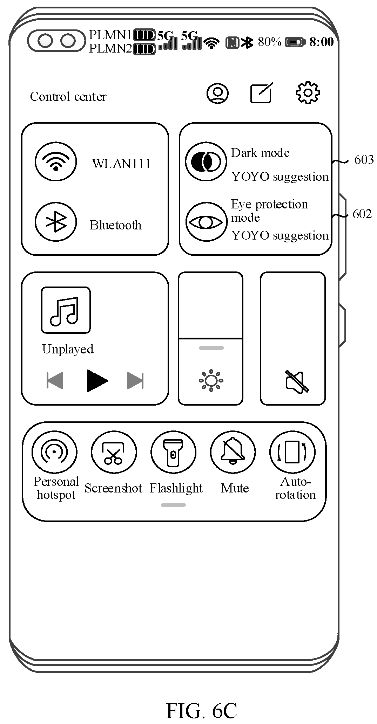

In FIG. 6A, FIG. 6B, and FIG. 6C, when an electronic device detects that ambient light luminance is lower than a luminance threshold, the electronic device may determine that the electronic device is in a dark-light scenario. The electronic device may display a flashlight button, a dark mode button, and/or an eye protection mode button in a third menu area.

For example, in the dark-light scenario, when the electronic device receives a slide-down operation, the electronic device may display an interface shown in FIG. 6A; and in the interface shown in FIG. 6A, the electronic device displays a flashlight button 601 and an eye protection mode button 602 in the third menu area. For another example, in the dark-light scenario, when the electronic device receives a slide-down operation, the electronic device may display an interface shown in FIG. 6B; and in the interface shown in FIG. 6B, the electronic device displays a flashlight button 601 and a dark mode button 603 in the third menu area. For still another example, in the dark-light scenario, when the electronic device receives a slide-down operation, the electronic device may display an interface shown in FIG. 6C; and in the interface shown in FIG. 6C, the electronic device displays a dark mode button 603 and an eye protection mode button 602 in the third menu area. This is not limited in this embodiment of this application.

It may be understood that, the flashlight button, the dark mode button, and/or the eye protection mode button may all be applicable to the dark-light scenario. When the quantity of shortcut buttons corresponding to the preset scenario is greater than the quantity of shortcut buttons that can be displayed in the third menu area, the electronic device may fixedly display any two shortcut buttons of the plurality of shortcut buttons, or may randomly display any two shortcut buttons of the plurality of shortcut buttons.

In a possible implementation, in the dark-light scenario, the electronic device enters an interface of the control center, and the electronic device may display the interface shown in FIG. 6A; and when the electronic device is in the dark-light scenario again, the electronic device still displays the interface of the control center shown in FIG. 6A. In the dark-light scenario, the electronic device may fixedly display the flashlight button and the eye protection mode button.

In another possible implementation, in the dark-light scenario, the electronic device enters an interface of the control center, and the electronic device may display the interface shown in FIG. 6A; and when the electronic device is in the dark-light scenario again, the electronic device may display the interface of the control center shown in FIG. 6B. In the dark-light scenario, the electronic device may randomly display any two shortcut buttons of the flashlight button, the eye protection mode button, and the eye protection mode button.

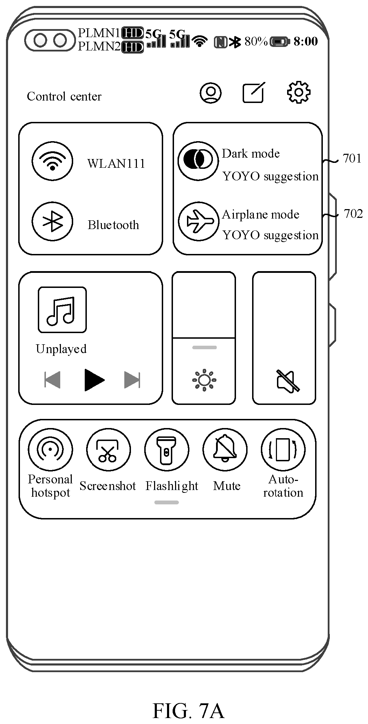

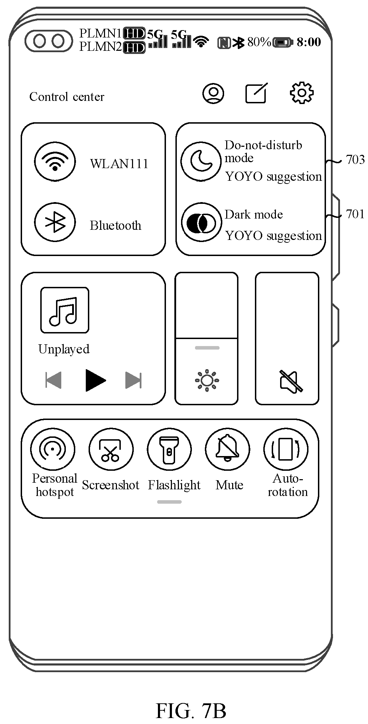

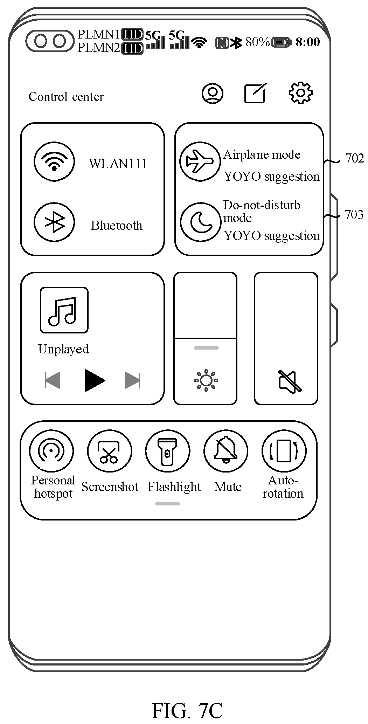

In FIG. 7A, FIG. 7B, and FIG. 7C, when an electronic device detects a sleep scenario, the electronic device may display a dark mode button, a do-not-disturb button, and/or an airplane mode button in a third menu area.

For example, in the sleep scenario, when the electronic device receives a slide-down operation, the electronic device may display an interface shown in FIG. 7A; and in the interface shown in FIG. 7A, the electronic device displays a dark mode button 701 and an airplane mode button 702 in the third menu area. For another example, in the sleep scenario, when the electronic device receives a slide-down operation, the electronic device may display an interface shown in FIG. 7B; and in the interface shown in FIG. 7B, the electronic device displays a dark mode button 701 and a do-not-disturb mode button 703 in the third menu area. For still another example, in the sleep scenario, when the electronic device receives a slide-down operation, the electronic device may display an interface shown in FIG. 7C; and in the interface shown in FIG. 7C, the electronic device displays an airplane mode button 702 and a do-not-disturb mode button 703 in the third menu area. This is not limited in this embodiment of this application.

In this embodiment of this application, a setting rule of the shortcut button in the sleep scenario is similar to the setting rule of the shortcut button in the dark-light scenario, and is not repeated again in this embodiment of this application.

In addition to the foregoing scenario, the electronic device may further recognize a preset scenario according to a type of an application that is run on a foreground of the electronic device. For example, when the electronic device runs a video application, the electronic device may recognize that the electronic device is currently in a video scenario, and recommend a shortcut button corresponding to the video scenario in the third menu area. When the electronic device runs a read application, the electronic device may recognize that the electronic device is currently in a read scenario, and recommend a shortcut button corresponding to the read scenario in the third menu area. When the electronic device runs a conference application, the electronic device may recognize that the electronic device is currently in a conference scenario, and recommend a shortcut button corresponding to the conference scenario in the third menu area. When the electronic device runs a calculator application, the electronic device may recognize that the electronic device is currently in a calculator scenario, and recommend a shortcut button corresponding to the calculator scenario in the third menu area; and so on.

Specifically, when the electronic device detects that a video application is run, the electronic device may display an auto-rotation button, an AI subtitle button, a screenshot button, a screen recording button, and/or a screen projection button in the third menu area. When the user browses a video, the electronic device may display video content in full screen by using the auto-rotation button; the electronic device may convert audio information in the video content into text information by using the AI subtitle button; the electronic device may capture the video content by using the screenshot button; the electronic device may record the video content by using the screen recording button; and the electronic device may project the video content onto another device by using the screen projection button.

Optionally, the electronic device may divide video scenarios into a long video scenario and a short video scenario according to categories of video applications. A category of a video application may be used to identify duration of video content in the video application. For example, a first video application category may correspond to a long video application; and a second video application category may correspond to a short video application.

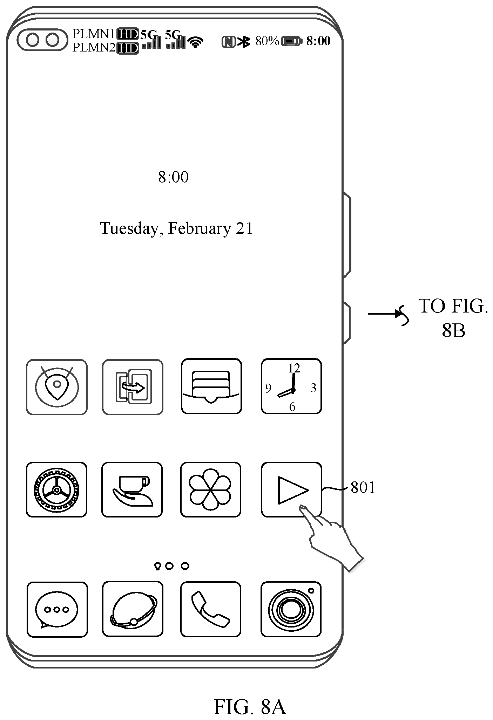

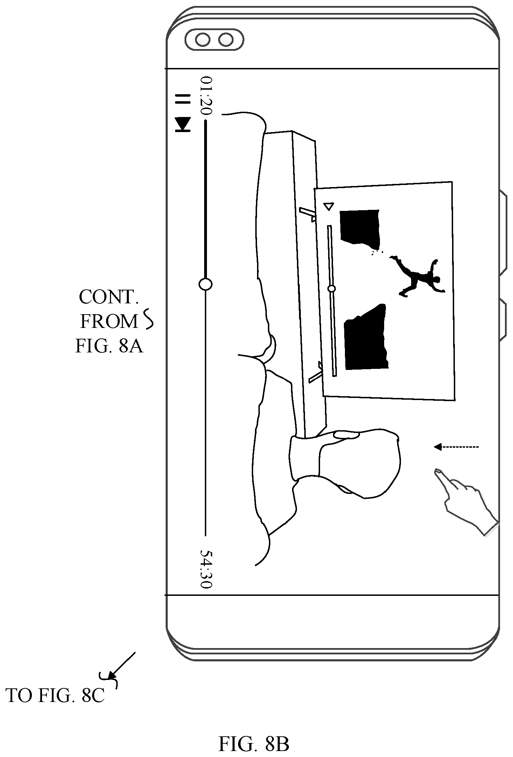

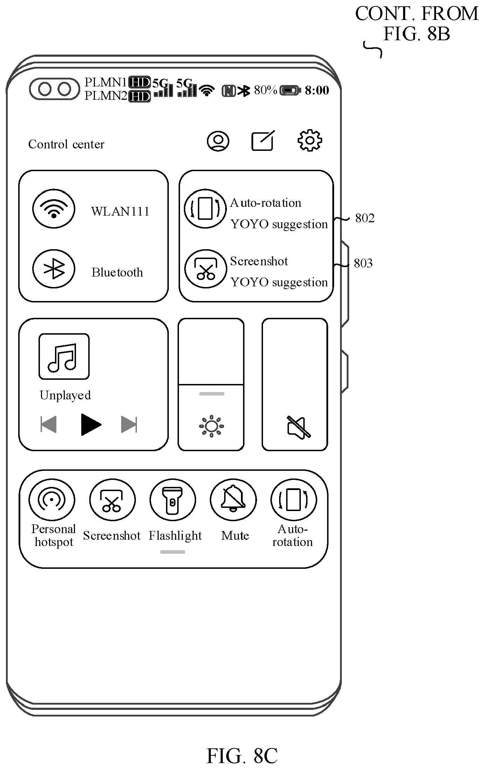

In a possible implementation, in FIG. 8A, FIG. 8B, and FIG. 8C, when the electronic device detects that a long video application is being run, the electronic device may display buttons such as an auto-rotation button, an AI subtitle button, a screenshot button, a screen recording button, and a screen projection button in the third menu area. For example, in an interface shown in FIG. 8A, when the electronic device receives a trigger operation for an icon 801 of the long video application, the electronic device may start the long video application, and the electronic device may display the interface shown in FIG. 8B.

The electronic device recognizes a long video scenario, and recommends display of the auto-rotation button and the screenshot button in the third menu area. In a process in which the electronic device plays a long video by using the long video application, when the electronic device receives a pull-down operation, the electronic device displays an interface shown in FIG. 8C; and the interface shown in FIG. 8C includes an auto-rotation button 802 and a screenshot button 803.

Optionally, the electronic device may alternatively display any two shortcut buttons of the auto-rotation button, the AI subtitle button, the screenshot button, the screen recording button, and the screen projection button in the long video scenario. This is not limited in this embodiment of this application.

In another possible implementation, when the electronic device detects that a short video application is being run, the electronic device may display buttons such as an AI subtitle button, a screenshot button, and a screen recording button in the third menu area. It may be understood that, some short video content is inappropriately used for landscape display and projected onto another device. The electronic device may not provide the auto-rotation button and the screen projection button in the short video scenario. A principle of the short video scenario is similar to that of the long video scenario, and an interface of the control center corresponding to the short video scenario is not described in detail in this embodiment of this application.

when the electronic device detects that a read application is run, the electronic device may display an ebook mode button and a select-to-speak button in the third menu area. When the user browses an article, the electronic device may provide immersive read experience for the user by using the ebook mode button; and the electronic device may automatically read, by using the select-to-speak button, a text selected by the user.

Optionally, the electronic device may divide read scenarios into a long read scenario and a short read scenario according to categories of read applications. A category of a read application may be used to identify an article length of article content in the read application. For example, a first read application category may correspond to a long read application; and a second read application category may correspond to a short read application.

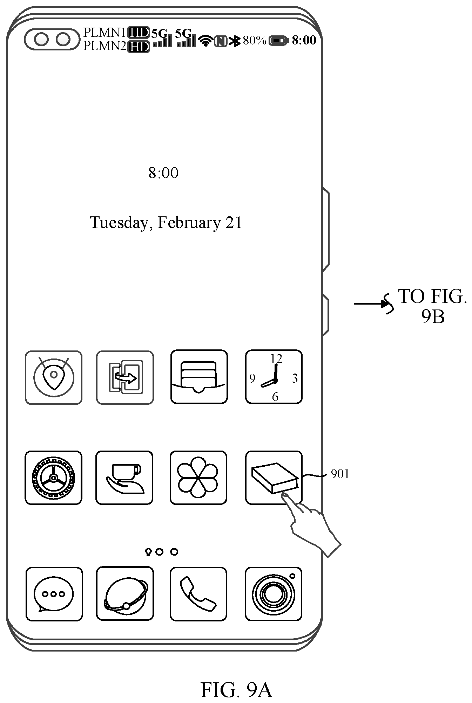

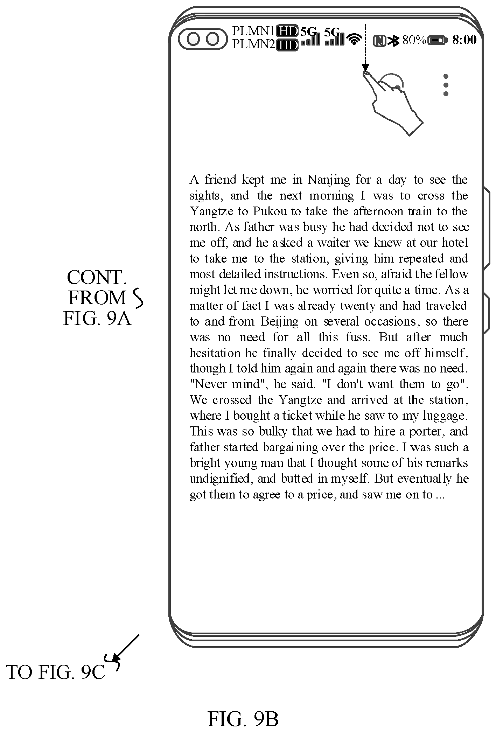

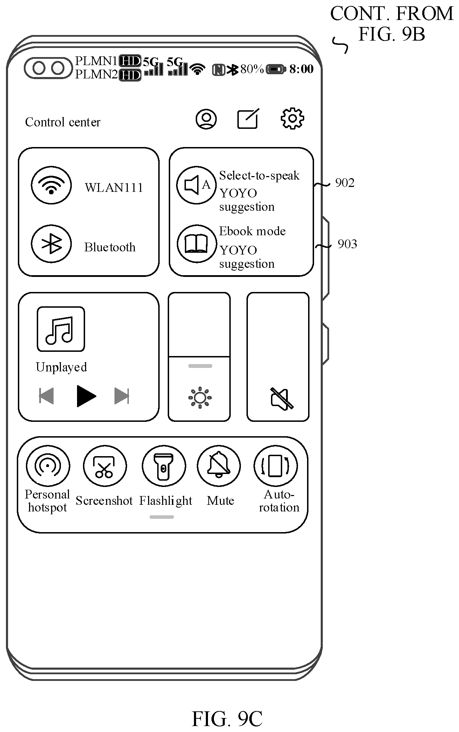

In a possible implementation, in FIG. 9A, FIG. 9B, and FIG. 9C, when the electronic device detects that a long read application is being run, the electronic device may display an ebook mode button and a select-to-speak button in the third menu area. For example, in an interface shown in FIG. 9A, when the electronic device receives a trigger operation for an icon 901 of the long read application, the electronic device may start the long read application, and the electronic device may display the interface shown in FIG. 9B.

The electronic device recognizes a long read scenario, and recommends display of an ebook mode button and a select-to-speak button in the third menu area. In a process in which the electronic device displays text content by using the long read application, when the electronic device receives a pull-down operation, the electronic device displays an interface shown in FIG. 9C; and the interface shown in FIG. 9C includes a select-to-speak button 902 and an ebook mode button 903.

In another possible implementation, when the electronic device detects that a short read application is being run, the electronic device may display a selection button in the third menu area. It may be understood that, some short read content (for example, news or web pages) is not applicable to the ebook mode, and the electronic device may not provide the ebook mode in the short read scenario. A principle of the short read scenario is similar to that of the long read scenario, and an interface of the control center corresponding to the short read scenario is not described in detail in this embodiment of this application.

When the electronic device detects that a conference application is run, the electronic device may display an AI subtitle button, a screenshot button, a screen recording button, and/or a screen projection button in the third menu area. When the user participates in a conference, the electronic device may convert voice information of the user into text information in real time by using the AI subtitle button; the electronic device may capture an interface in a conference process by using the screenshot button; the electronic device may record the conference content by using the screen recording button; and the electronic device may project the conference content onto a large-screen device by using the screen projection button.

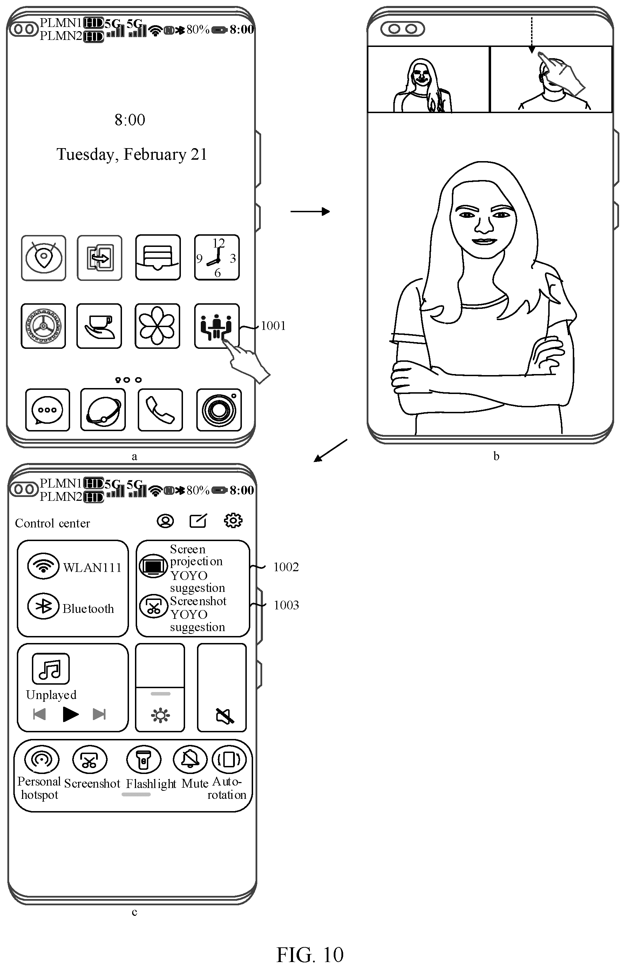

When the electronic device detects that a conference application is being run, the electronic device may display an AI subtitle button, a screenshot button, a screen recording button, and/or a screen projection button in the third menu area. For example, as shown in FIG. 10, in an interface shown in a of FIG. 10, when the electronic device receives a trigger operation for an icon 1001 of the conference application, the electronic device may start the conference application, and the electronic device may display the interface shown in b of FIG. 10.

The electronic device recognizes a conference scenario, and recommends display of a screenshot button and a screen projection button in the third menu area. In a process in which the electronic device displays the conference content by using the conference application, when the electronic device receives a pull-down operation, the electronic device displays an interface shown in c of FIG. 10; and the interface shown in c of FIG. 10 includes a screen projection button 1002 and a screenshot button 1003.

When the electronic device detects that a calculator application is run, the electronic device may display an auto-rotation button in the third menu area. When the user uses a calculator, the electronic device may switch between a landscape screen and a portrait screen by using the auto-rotation button. For a calculator scenario, refer to an interface of a control center and a scenario recognition procedure described in the video scenario, the read scenario, and the conference scenario. Details are not described in this embodiment of this application.

In some embodiments, the electronic device may register geofences, for example, an airport geofence, a family geofence, and a company geofence. The electronic device may determine a scenario in which the electronic device is located according to different geofences. The electronic device may recommend different shortcut buttons in the third menu area according to the location of the user.

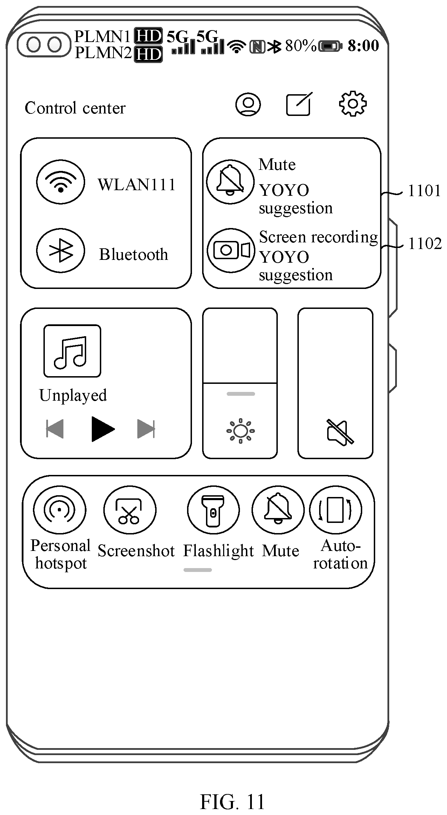

In this embodiment of this application, the electronic device may recommend a shortcut button according to a use habit of the user and a scenario. For example, when the user often uses a mute button and a screen recording button in a company fence, the electronic device may recommend a mute button 1101 and a screen recording button 1102 in the third menu area after detecting that the user enters the company, as shown in FIG. 11.

For another example, when the user often uses a screenshot button and a screen recording button at home, the electronic device may recommend the screenshot button and the screen recording button in the third menu area after detecting that the user enters a family geofence.

In this way, the electronic device may provide corresponding shortcut buttons in the third menu area according to different preset scenarios, so that a shortcut button in the third menu area has a relatively high matching degree with a current scenario, thereby improving utilization of the shortcut button in the third menu area in the current scenario, and further improving user experience.

In this embodiment of this application, the electronic device may display corresponding shortcut buttons in different scenarios according to the foregoing correspondence. The electronic device may alternatively update the preset scenario and the correspondence according to a use habit of the user.

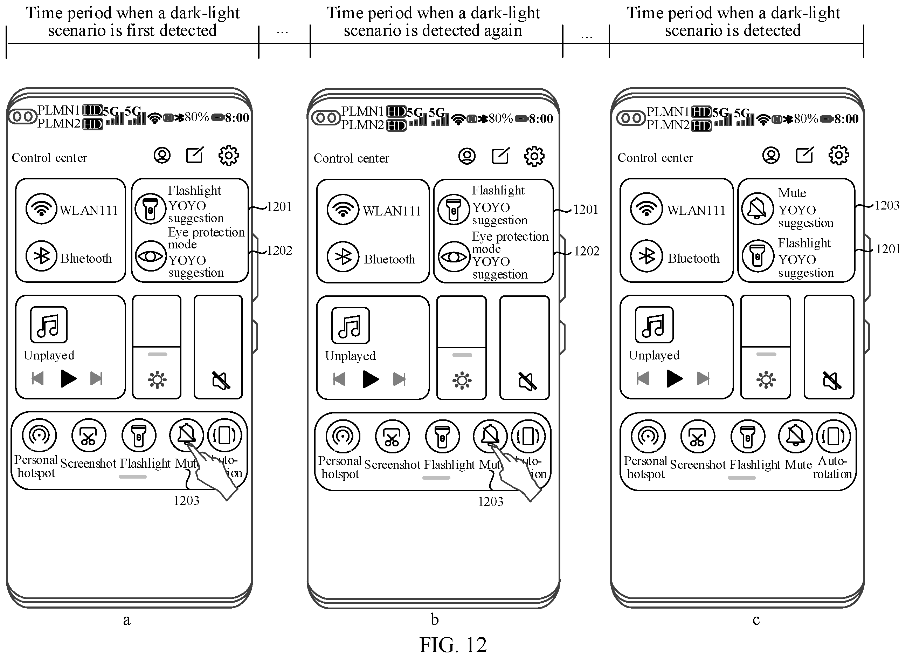

Using a dark-light scenario as an example, in FIG. 12, within a time period in which the electronic device detects the dark-light scenario for the first time, the electronic device may recommend a flashlight button 1201 and an eye protection mode 1202 in the third menu area, for example, an interface shown in a of FIG. 12. The flashlight button 1201 and the eye protection mode 1202 may be understood as initial shortcut buttons corresponding to the dark-light scenario when the electronic device does not learn a use habit of the user in the dark-light scenario.

In some embodiments, when the electronic device is in the dark-light scenario, the user may not use the shortcut button in the third menu area. For example, in the interface shown in a of FIG. 12, the electronic device receives a trigger operation for a mute button 1203 in a second menu area; and the electronic device may turn off the volume in response to the trigger operation. Meanwhile, the electronic device may record the use frequency of the mute button in the time period of the dark-light scenario.

In this embodiment of this application, when the electronic device is in a same preset scenario in the former time and the latter time, the electronic device may display a fixed shortcut button in the third menu area. For example, when the electronic device enters the dark-light scenario for the first time, the electronic device displays the interface shown in a of FIG. 12. The third menu area includes a flashlight button and an eye protection mode button. When detecting the dark-light scenario again, the electronic device may display the interface shown in b of FIG. 12, and also displays a flashlight button 1201 and an eye protection mode button 1202 in the third menu area.

In the time period in which the dark-light scenario is detected again, the electronic device may further detect a trigger operation for the mute button 1203. In the dark-light scenario recorded by the electronic device, the use frequency of the mute button is increased by 1, and the use duration of the mute button is also correspondingly accumulated. The electronic device may learn, by using a use frequency and/or a use duration of a shortcut button in a preset scenario, a use habit of the user in the preset scenario. For example, when the use frequency of the mute button exceeds the frequency threshold, the electronic device may update the mute button to the correspondence. Alternatively, when the use frequency reaches the frequency threshold in the preset time, the electronic device may update the mute button to the correspondence. For example, in a month, in the dark-light scenario, the user uses the mute button for three times or more, and the electronic device associates the mute button with the dark-light scenario.

After updating the mute button to the correspondence of the dark-light scenario, the electronic device may detect the dark-light scenario. In this case, the electronic device may display an interface shown in c of FIG. 12. In the interface of the control center, a flashlight button 1201 and a mute button 1203 are displayed in a third menu area.

In some embodiments, after the electronic device learns a use preference of the user, the electronic device may preferentially display a shortcut button related to the use preference of the user. For example, the mute button 1203 is a shortcut button learned by the electronic device according to the use habit of the user in the dark-light scenario. In the interface shown in c of FIG. 12, the electronic device may preferentially display the mute button 1203 in the third menu area, and display an initial shortcut button (for example, the flashlight button 1201) corresponding to the dark-light scenario below the mute button 1203.

In this way, the electronic device may learn the use habit of the user for the shortcut button in the preset scenario. Because the updated shortcut button better meets a user requirement, utilization of the shortcut button in the third menu area is further improved.

It should be noted that, in this embodiment of this application, the correspondence between a preset scenario and a shortcut button is merely described as an example, but the foregoing interfaces do not limit content displayed on the interface of the control center.

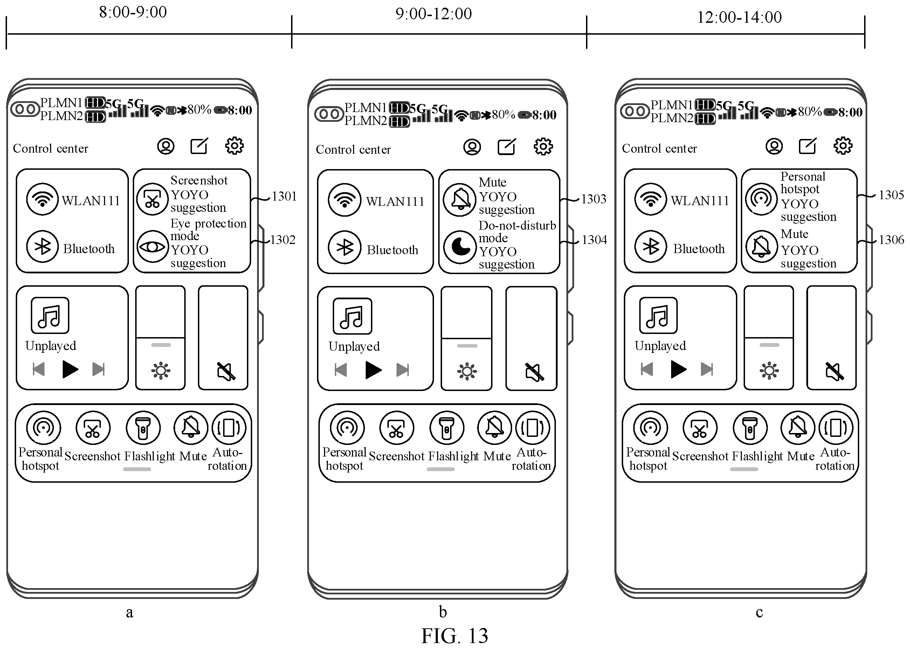

In some other embodiments, the electronic device may learn the use habit of the user according to a time dimension. As shown in FIG. 13:
The electronic device learns use habits of the user for shortcut buttons in different time periods according to the time dimension. For example, within 8:00-9:00, the use frequency with which the user uses the screenshot button and the eye protection mode button is highest; within 9:00-12:00, the use frequency with which and/or the use duration in which the user uses the mute button and the do-not-disturb mode button is highest; and within 12:00-14:00, the use frequency with which and/or the use duration in which the user uses the personal hotspot button and the mute button is highest. The electronic device may set correspondences between different time periods and shortcut buttons. For example, 8:00-9:00 corresponds to the screenshot button and the eye protection mode button; 9:00-12:00 corresponds to the mute button and the do-not-disturb mode button; and 12:00-14:00 corresponds to the personal hotspot button and the mute button.

When the electronic device does not detect any preset scenario between 8:00 and 9:00, the electronic device may display an interface of a control center shown in a of FIG. 13. A screenshot button 1301 and an eye protection mode button 1302 are displayed in a third menu area of the interface. When the electronic device does not detect any preset scenario between 9:00 and 12:00, the electronic device may display an interface of a control center shown in b of FIG. 13. A mute button 1303 and a do-not-disturb mode button 1304 are displayed in a third menu area of the interface. When the electronic device does not detect any preset scenario between 12:00 and 14:00, the electronic device may display an interface of a control center shown in c of FIG. 13. A personal hotspot button 1305 and a mute button 1306 are displayed in a third menu area of the interface.

In this way, when the electronic device does not detect any preset scenario, the electronic device may recommend a shortcut button according to time, and may also detail the shortcut button and a habit of the user, so that the shortcut button recommended in the third menu area is more consistent with the use habit of the user, thereby improving utilization of the shortcut button in the third menu area.

In this embodiment of this application, the shortcut button in the third menu area may be linked with the shortcut button in the second menu area.

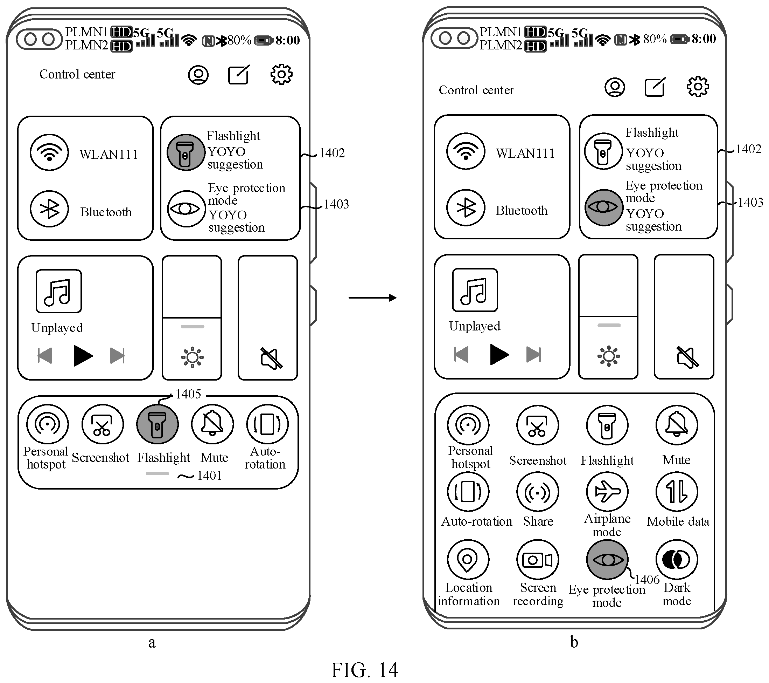

Using a dark-light scenario as an example, in FIG. 14, the electronic device may display a flashlight button 1402 and an eye protection mode 1403 in the third menu area, and display a flashlight button 1405 in the second menu area, as shown in an interface in a of FIG. 14. When the electronic device receives a trigger operation for the flashlight button 1402 in the third menu area, the electronic device may enable a flashlight function, and display an icon of the flashlight button 1402 in an enabled state. Meanwhile, an icon of the flashlight button 1405 in the second menu area is also displayed in an enabled state.

When the electronic device receives a trigger operation for the eye protection mode button 1403 in the third menu area, the electronic device may enable an eye protection mode, and display an icon of the eye protection mode button 1403 in an enabled state. It may be understood that, in the interface shown in a of FIG. 14, the eye protection mode button may not be displayed. The electronic device may display, based on a trigger operation for a more button 1401, an interface shown in b of FIG. 14. In the interface shown in b of FIG. 14, an eye protection mode button 1406 in the second menu area is also in an enabled state.

In some embodiments, the electronic device may neither detect any preset scenario in a current time period, nor learn a use habit of the user in the current time period according to the time dimension. In this case, the electronic device may provide some shortcut buttons that are relatively weak in correlation with scenarios and that may be shared in a plurality of scenarios.

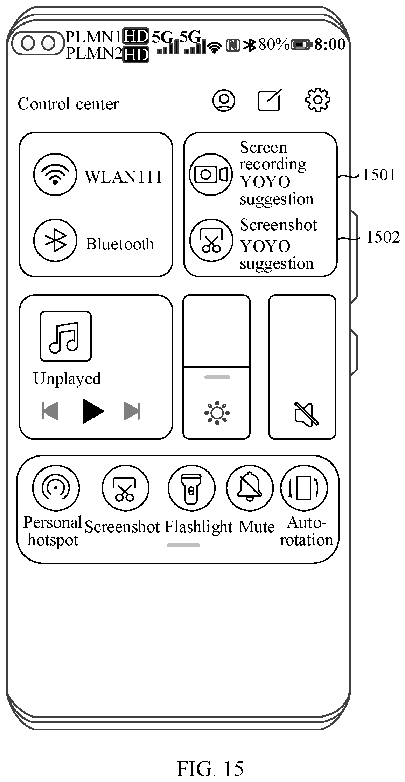

For example, as shown in FIG. 15, the electronic device neither recognizes any preset scenario, nor learns a use habit of the user in a current time period. The electronic device may display an interface shown in FIG. 15. A screen recording button 1501 and a screenshot button 1502 are recommended to be displayed in the third menu area. In this embodiment of this application, when there is no preset scenario and there is no use habit of the user, the electronic device may display gadget shortcut buttons such as a screenshot button, a screen recording button, a calculator button, a timer button, and a recorder button, or other shortcut buttons, which is not limited in this embodiment of this application.

It should be noted that, some shortcut buttons have a relatively strong association with scenarios or can be used only in specific scenarios. When there is no preset scenario and there is no use habit of the user, the electronic device does not preferentially recommend such shortcut buttons in the third menu area. For example, such buttons may be: a flashlight button, an airplane mode button, a low-battery mode button, a dark mode button, a share button, and a screen projection button.

In this embodiment of this application, there may be a case in which the electronic device is in a plurality of preset scenarios. When there is a conflict between the plurality of preset scenarios, the electronic device may compare use frequencies of shortcut buttons in the plurality of preset scenarios, and preferentially display a shortcut button with a relatively high use frequency.

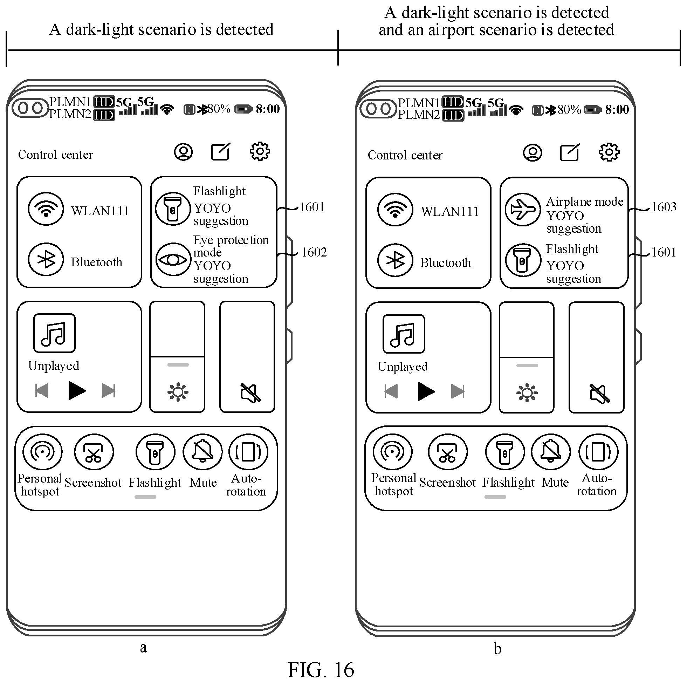

For example, the user hurries to an airport in the evening. The interface of the control center of the electronic device may be changed as shown in FIG. 16. When the electronic device detects the dark-light scenario, the electronic device may display an interface shown in a of FIG. 16. Shortcut buttons, for example, a flashlight button 1601 and an eye protection mode button 1602 corresponding to the dark-light scenario are displayed in a third menu area of the interface. When the electronic device detects both the dark-light scenario and the airport scenario, the electronic device may display an interface shown in b of FIG. 16. Shortcut buttons, for example, an airplane mode button 1603 and a flashlight button 1601 corresponding to the dark-light scenario and/or the airport scenario may be displayed in a third menu area of the interface.

The interface shown in b of FIG. 16 may be understood as follows: The electronic device sorts use frequencies and use preferences of the flashlight button and the eye protection mode button that correspond to the dark-light scenario, and the airplane mode button corresponding to the airport scenario, and preferentially displays a shortcut button with a higher use frequency. For example, the use frequency of the airplane mode button > the use frequency of the flashlight button > the use frequency of the eye protection mode button, and the electronic device preferentially displays the airplane mode button 1603 and the flashlight button 1601.

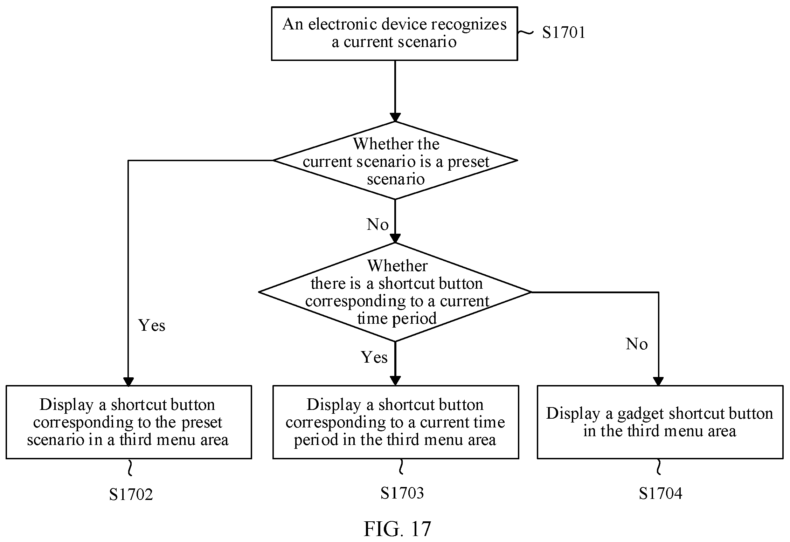

The foregoing embodiments describe a correspondence between a preset scenario, a user's use habit, and a shortcut button in the embodiments of this application. The following describes a display method for an interface of a control center provided in an embodiment of this application with reference to FIG. 17.

S1701. An electronic device recognizes a current scenario.

The electronic device may recognize whether the current scenario is a preset scenario.

In this embodiment of this application, the prediction scenario includes a low-battery scenario, an airport scenario, a dark-light scenario, a sleep scenario, a video scenario (a long video scenario and a short video scenario), a read scenario (a long read scenario and a short read scenario), a conference scenario, a family or company scenario, a calculator scenario, and the like. The electronic device may subscribe to a scenario fence, to obtain related information of a scenario, and perform scenario recognition based on the related information. The scenario fence includes: a low-battery fence, an airport fence, a dark-light fence, a sleep fence, a long video scenario fence, a short video scenario fence, a long read scenario fence, a short read scenario fence, a conference scenario fence, a family or company scenario fence, a calculator scenario fence, and the like.

The electronic device may obtain related information of the foregoing scenario in the following manner, and perform scenario recognition based on the related information.

Specifically, after the electronic device subscribes to the low-battery fence, the electronic device may obtain a battery level value by using a system function. The electronic device determines that the electronic device is in the low-battery scenario when the battery level value of the electronic device is less than a battery level threshold. For example, the battery level threshold is 20%.

After the electronic device subscribes to the long video scenario fence, the short video scenario fence, the long read scenario fence, the short read scenario fence, the conference scenario fence, and the calculator scenario fence, the electronic device may obtain, through a system function, a package name of an application running at the foreground. When the package name of the application matches a package name of the foregoing preset scenario, the electronic device determines that the electronic device is in the preset scenario. For example, when the package name of the application running at the foreground is a package name of a long video application, the electronic device determines that the application is in the long video scenario.

After the electronic device subscribes to the dark-light scenario, the electronic device may acquire the ambient light luminance by using a system function. The electronic device determines that the electronic device is in the dark-light scenario when a luminance value of the electronic device is lower than a luminance threshold. For example, the luminance threshold is 100 lux.

After the electronic device subscribes to the airport fence, the electronic device may determine that the electronic device is in the airport scenario by using information such as an airport geofence and a flight order. In some embodiments, the electronic device may register an airport geofence. When the electronic device enters the airport geofence, the airplane mode button is recommended. In some other embodiments, the electronic device may obtain the flight information of the user, for example, a flight number, a place of departure, a destination, a takeoff time, and an arrival time of a flight. The airplane mode button is recommended when a difference between a current time and the takeoff time falls within a time threshold range. In some other embodiments, the electronic device may alternatively detect the airport scenario in two manners, thereby improving accuracy of a scenario detection result.

After the electronic device subscribes to the sleep scenario fence, the electronic device may obtain a user portrait. When the current time is within a sleep time in the user portrait, the electronic device determines that the electronic device is in the sleep scenario, and recommends the dark mode button, the do-not-disturb button, the airplane mode button, and the like. In some embodiments, the sleep time in the user portrait may be obtained by collecting statistics on a time period in which the user does not use the electronic device, or may be obtained in another manner. This is not limited in this embodiment of this application.

After the electronic device subscribes to the family scenario fence, the electronic device may register the family geofence. When the electronic device enters the family geofence, the electronic device determines that the electronic device is in the family scenario.

After the electronic device subscribes to the company scenario fence, the electronic device may register the company geofence. When the electronic device enters the company geofence, the electronic device determines that the electronic device is in the company scenario.

It should be noted that, in this embodiment of this application, only an exemplary process of recognizing a preset scenario is described. In this embodiment of this application, scenario recognition may alternatively be implemented in another manner. This is not limited in this embodiment of this application.

S1702. When the electronic device recognizes a preset scenario, the electronic device recommends a shortcut button corresponding to the preset scenario in a third menu area of an interface of a control center.

A correspondence between a preset scenario and a shortcut button may be shown in Table 1. The electronic device may recommend a corresponding shortcut button according to a preset scenario.

It should be noted that, in this embodiment of this application, the electronic device may update the correspondence between a preset scenario and a shortcut button according to a situation of using shortcut buttons by the user in the preset scenario. The correspondence may include more or fewer shortcut buttons related to a use habit of the user. The number of shortcut buttons in the correspondence is not limited in this embodiment of this application.

S1703. When the electronic device does not detect a preset scenario, the electronic device recommends a shortcut button corresponding to a current time period in a third menu area of an interface of a control center.

For this process, refer to the related descriptions in the embodiment shown in FIG. 13. In this embodiment of this application, time may be divided, and statistics on use frequencies of shortcut buttons in different time periods are collected. When the electronic device does not detect a preset scenario, the electronic device may acquire a system time, and recommend, based on a priority, a shortcut button whose use frequency is high within a time period corresponding to the system time.

S1704. When there is no corresponding shortcut button in a current time period, the electronic device recommends a gadget shortcut button in a third menu area of an interface of a control center.

For this process, refer to the related descriptions in the embodiment shown in FIG. 15. Details are not described in this embodiment of this application again.

It may be understood that, in this embodiment of this application, in the third menu area of the interface of the control center, a shortcut button corresponding to a preset scenario is preferentially displayed; if the electronic device does not detect the preset scenario, the electronic device displays, according to a use habit of the user in the current time period, a shortcut button with a relatively high use frequency; and if the electronic device neither detects a preset scenario nor learns a use habit of the user in the current time period, a gadget shortcut button shown in FIG. 15 is provided.

In this way, the electronic device may detail a use habit of the user according to a scenario, time, and the like, so that the shortcut button recommended by the electronic device better conforms to the use habit of the user, thereby improving utilization of the shortcut button in the third menu area and improving user experience.

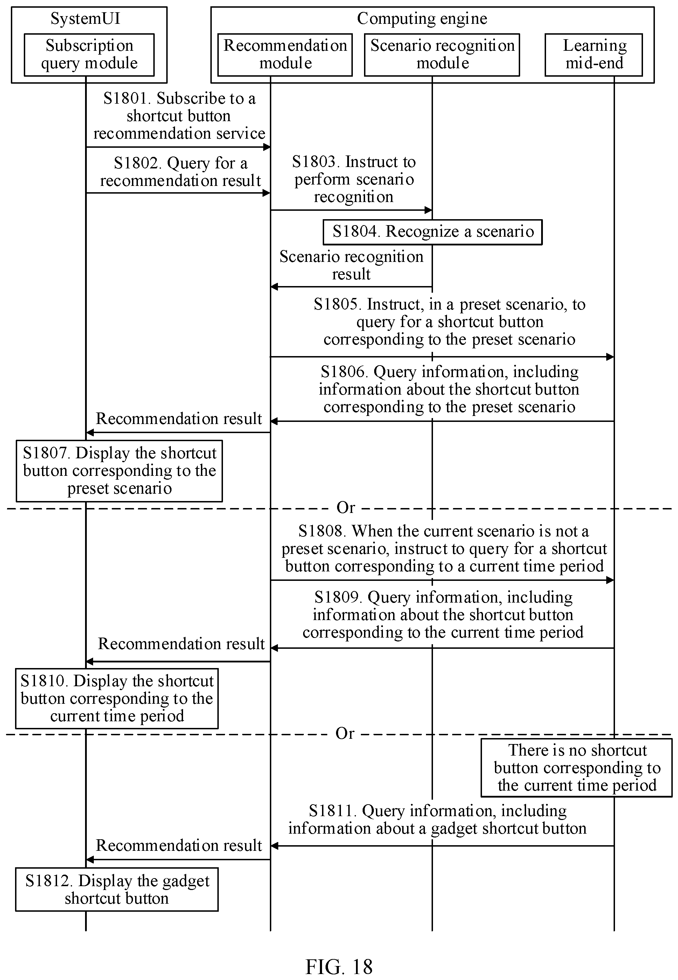

A software interaction process of an electronic device in embodiments of this application are described below with reference to FIG. 18 to FIG. 19.

The electronic device may include a perception module, a computing engine, and a system user interface (systemUI). The systemUI includes a subscription query module and an event reporting module (which may also be referred to as a data donation module). The computing engine may include the recommendation module, a scenario recognition module, and a learning mid-end. The perception module may include a data mid-end, a data collection fence, and a perception snapshot module.

FIG. 18 shows a process of using an interface of a control center according to an embodiment of this application. As shown in FIG. 18:

For example, S1801. The systemUI subscribes to a shortcut button recommendation service from the recommendation module.

The shortcut button recommendation service may be understood as a service of recommending a shortcut button provided in the third menu area in this embodiment of this application. After subscribing to the shortcut button recommendation service, the systemUI may access the recommendation module, to obtain service information.

S1802. The systemUI queries the recommendation module for a recommendation result.

The recommendation result may be used for indicating information about the shortcut button recommended in the third menu area in a current scenario and/or a current time period.

In a possible implementation, when the systemUI receives an operation for displaying an interface of the control center, the systemUI may perform step S1802; and/or the systemUI may periodically query for a recommendation result, and perform step S1802. In this embodiment of this application, a trigger condition of step S1802 is not limited.

S1803. The recommendation module instructs the scenario recognition module to perform scenario recognition.

S1804. The scenario recognition module recognizes a scenario, and transfers a scenario recognition result to the recommendation module.

In this embodiment of this application, the scenario recognition module may query for a battery level, a luminance value, and a package name of a foreground application by using a system function.

When the battery level is lower than a battery level threshold, the scenario recognition module may output a scenario recognition result, where the scenario recognition result includes information about a low-battery scenario.

The scenario recognition module may obtain the luminance value reported by an ambient light sensor. When the luminance value is lower than a luminance threshold, the scenario recognition module may output a scenario recognition result, where the scenario recognition result includes information about a dark-light scenario.

When the package name of the foreground application is a package name of a preset application, the scenario recognition module transfers a scenario recognition result to the recommendation module.

For example, the electronic device may store an application whitelist of preset scenarios. When the whitelist includes the package name of the foreground application, the scenario recognition module outputs a scenario recognition result according to a preset scenario that corresponds to the package name of the foreground application and that is in the whitelist. For example, the foreground application is a video application, and the scenario recognition result includes information about a video scenario. The foreground application is a read application, and the scenario recognition result includes information about a read scenario. The foreground application is a conference application, and the scenario recognition result includes information about a conference scenario. The foreground application is a calculator application, the electronic device does not enable an auto-rotation function, and the scenario recognition result includes information about a calculator scenario.

It should be noted that, in this embodiment of this application, in the whitelist, the video scenario may be divided into a long video scenario and a short video scenario, and the read application may be divided into a long read application and a short read application. This is not limited in this embodiment of this application.

In this embodiment of this application, the scenario recognition module may query for a user portrait of the learning mid-end and obtain a system time by using a system function. The user portrait includes a sleep time portrait of the user. When the system time is within the sleep time or a specific time before the sleep time, the scenario recognition module may output a scenario recognition result. The scenario recognition result includes information about a sleep scenario.

In this embodiment of this application, the scenario recognition module may query a perception snapshot module (the perception snapshot module is not shown in FIG. 18), to obtain a geographic location snapshot, for example, an airport snapshot, a family snapshot, and a company snapshot. A geofence corresponding to each geographic location snapshot is registered in the electronic device. The scenario recognition module may further query for geographical location information. For example, when the current geographic location is in an airport geofence, the scenario recognition module outputs a scenario recognition result, and the scenario recognition result includes airport scenario information. When the current geographic location is in a family geofence, the scenario recognition module outputs a scenario recognition result, and the scenario recognition result includes family scenario information. When the current geographic location is in a company geofence, the scenario recognition module outputs a scenario recognition result, and the scenario recognition result includes company scenario information.

In this way, the scenario recognition module may return the scenario recognition result to the recommendation module, to indicate whether a current moment is in the preset scenario.

S1805. When the current scenario is a preset scenario, the recommendation module instructs the learning mid-end to query for a shortcut button corresponding to the preset scenario.

After obtaining the scenario recognition result, the recommendation module may query, according to scenario information in the scenario recognition result, the learning mid-end for a shortcut button corresponding to the scenario information.

The learning mid-end may include a correspondence between a preset scenario and a shortcut button. It may be understood that, initially, the electronic device obtains a relatively small frequency of using the shortcut button by the user, and the learning mid-end may not learn a use habit of the user. The learning mid-end may return the shortcut button corresponding to the preset scenario to the recommendation module according to the correspondence in Table 1, for example, in the embodiments shown in FIG. 4A, FIG. 4B, and FIG. 4C to FIG. 11. As the use frequency of the user increases, the learning mid-end may learn the shortcut button preferred by the user in the preset scenario, and the learning mid-end may update the shortcut button corresponding to the preset scenario, for example, in the embodiment shown in FIG. 12.

S1806. The recommendation module obtains query information returned by the learning mid-end, where the query information includes information about the shortcut button corresponding to the preset scenario.

S1807. The systemUI obtains the recommendation result returned by the recommendation module, and the systemUI displays the shortcut button corresponding to the preset scenario on the interface of the control center.

The electronic device may display for example, the interfaces of the control centers in FIG. 4A, FIG. 4B, and FIG. 4C to FIG. 12. Details are not described in this embodiment of this application again.

Alternatively, after step S1804, the process further includes:
S1808. When the current scenario is not a preset scenario, the recommendation module instructs the learning mid-end to query for a shortcut button corresponding to a current time period.

In some embodiments, the electronic device may not be in any preset scenario, and the recommendation module may instruct the learning mid-end to query for a shortcut button corresponding to a current time period. For example, if the current time is 10:00, and the electronic device is not in any preset scenario, the recommendation module may obtain, for example, a shortcut button corresponding to a time period of 9:00-12:00 shown in FIG. 13.

S1809. The recommendation module obtains query information returned by the learning mid-end, where the query information includes information about the shortcut button corresponding to the current time period.

S1810. The systemUI obtains the recommendation result returned by the recommendation module, and the systemUI displays the shortcut button corresponding to the current time period on the interface of the control center.

The electronic device may display for example, the interface of the control center in FIG. 13. Details are not described in this embodiment of this application again.

Alternatively, after step S1808, the process further includes:
S1811. When there is no corresponding shortcut button in the current time period, the recommendation module obtains query information returned by the learning mid-end, where the query information includes information about a gadget shortcut button.

When the electronic device is not in any preset scenario, and the learning mid-end does not learn a use habit of the user in the current time period, the electronic device may display a gadget button in the third menu area of the interface of the control center.

S1812. The systemUI obtains the recommendation result returned by the recommendation module, and the systemUI displays the gadget shortcut button on the interface of the control center.

The electronic device may display for example, the interface of the control center in FIG. 15. Details are not described in this embodiment of this application again.

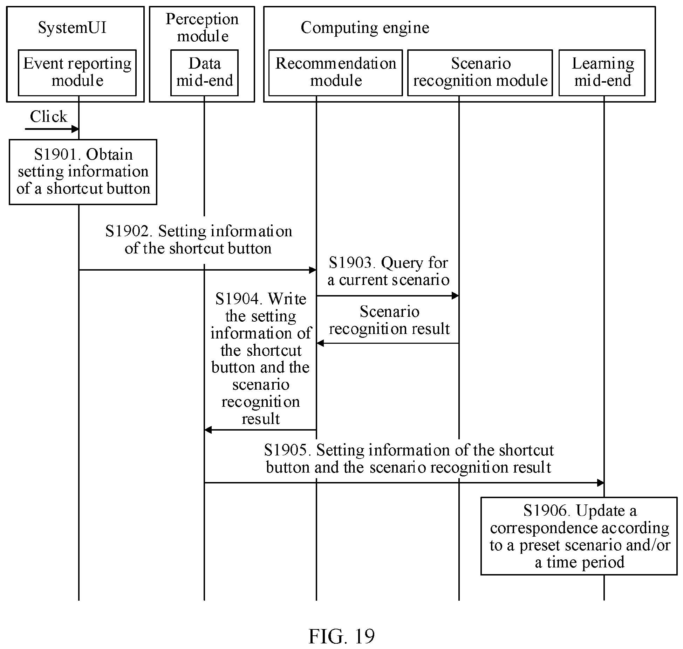

In the foregoing embodiments, a process of using a display method for an interface of a control center in an embodiment of this application is described. The following describes a process of learning a display method for an interface of a control center in an embodiment of this application with reference to FIG. 19. As shown in FIG. 19:

For example, S1901. When an operation for setting a shortcut button is received, the systemUI obtains setting information of the shortcut button.

The operation for setting a shortcut button may be, for example, an operation that the user clicks the shortcut button on an interface of a control center, or may be, for example, an operation that the user clicks the shortcut button on a setting interface. The setting information of the shortcut button may be, for example, a name of the shortcut button, a clicking location, a switch state of the shortcut button before clicking, and a clicking manner. The clicking manner may include long-pressing the shortcut button, clicking a switch of the shortcut button, and the like.

S1902. The systemUI transfers the setting information of the shortcut button to the recommendation module.

In some embodiments, after obtaining the setting information of the shortcut button, the systemUI may transfer the setting information to the recommendation module by using a data collection fence (the data collection fence is not shown in FIG. 19). For example, after obtaining the setting information of the shortcut button delivered by the systemUI, the data collection fence donates event type data and service record data by using a scenario suggestion service (suggestion kit), so that the recommendation module obtains the setting information of the shortcut button.

S 1903. The recommendation module obtains the setting information of the shortcut button, and queries the scenario recognition module for a current scenario.

For a process of performing scenario recognition by the scenario recognition module, refer to related descriptions in step S1804. Details are not described herein again.

S1904. The recommendation module obtains a scenario recognition result, and writes the setting information of the shortcut button and the scenario recognition result into the data mid-end.

After obtaining the scenario recognition result of the scenario recognition module, the recommendation module may write the setting information of the shortcut button and the scenario recognition result into the data mid-end, and the data mid-end and the learning mid-end perform next processing.

S1905. The data mid-end transfers the setting information of the shortcut button and the scenario recognition result to the learning mid-end.

S1906. The learning mid-end updates a correspondence between a preset scenario and a shortcut button, and/or a correspondence between a time period and a shortcut button based on the setting information of the shortcut button and the scenario recognition result.

It may be understood that, after receiving the operation for setting the shortcut button, the electronic device may obtain, in real time, a scenario when the shortcut button is clicked. When the current scenario is a preset scenario, the learning mid-end may record the use frequency and/or use duration of the shortcut button in the preset scenario, and update the correspondence between the preset scenario and the shortcut button. For example, when the use frequency of the shortcut button is greater than the frequency threshold, the electronic device updates the shortcut button to the correspondence of the preset scenario; and/or, when the use duration of the shortcut button is greater than the duration threshold, the electronic device updates the shortcut button to the correspondence of the preset scenario. Subsequently, the electronic device may output, by using the updated correspondence, a shortcut button matching the preset scenario.

Alternatively, when the current scenario is not any preset scenario, the learning mid-end may update the correspondence between the time period when the shortcut button is clicked and the shortcut button. For example, when the use frequency of the shortcut button is greater than the frequency threshold, the electronic device updates the shortcut button to the correspondence of the time period; and/or, when the use duration of the shortcut button is greater than the duration threshold, the electronic device updates the shortcut button to the correspondence of the time period. The frequency threshold and the duration threshold in the preset scenario correspondence may be the same as or different from the frequency threshold and the duration threshold in the time period correspondence. This is not limited in this embodiment of this application.

It should be noted that user information (including but not limited to user equipment information, user personal information, and the like) and data (including but not limited to data used for analysis, stored data, displayed data, and the like) in the embodiments of this application are all information and data that are authorized by the user or that are fully authorized by each party. In addition, collection, use, and processing of the related data need to comply with relevant laws, regulations, and standards of related countries and areas, and a corresponding operation entry is provided for the user to choose to authorize or reject.

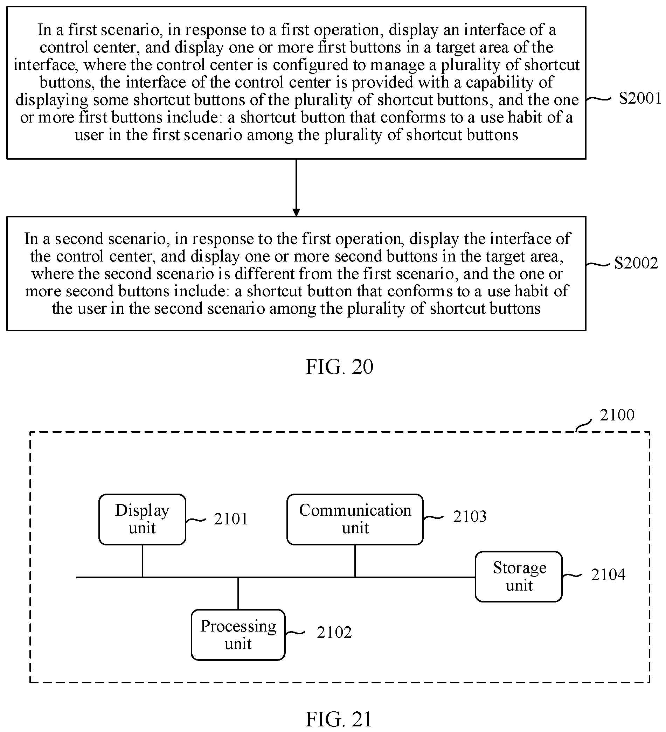

Based on the foregoing embodiments, an embodiment of this application provides a display method for an interface of a control center. For example, FIG. 20 is a schematic flowchart of a display method for an interface of a control center according to an embodiment of this application.

As shown in FIG. 20, the display method for an interface of a control center may include the following steps:
S2001. In a first scenario, in response to a first operation, display an interface of a control center, and display one or more first buttons in a target area of the interface, where the control center is configured to manage a plurality of shortcut buttons, the interface of the control center is provided with a capability of displaying some shortcut buttons of the plurality of shortcut buttons, and the one or more first buttons include: a shortcut button that conforms to a use habit of a user in the first scenario among the plurality of shortcut buttons.

The first operation may correspond to an operation of sliding down from the top of the screen, and the interface of the control center may correspond to interfaces displaying a plurality of shortcut buttons in FIG. 4A, FIG. 4B, and FIG. 4C to FIG. 11. The target area may be a third menu area on the interface of the control center. The first scenario may be a preset scenario in Table 1, for example, a low-battery scenario, an airport scenario, a dark-light scenario, a sleep scenario, a long video scenario, a short video scenario, a long read scenario, a short read scenario, a conference scenario, a family scenario, a company scenario, and a calculator scenario. The one or more first buttons may be shortcut buttons corresponding to the preset scenario in Table 1. For example, the first scenario is the low-battery scenario, and the first button is a low-battery mode button.

It should be noted that the correspondence in Table 1 is not fixed, and the electronic device may subsequently continuously update the correspondence between a preset scenario and a shortcut button in Table 1 according to a use situation of the user. The shortcut button conforming to the use habit of the user in the first scenario may be a shortcut button obtained according to the preset correspondence shown in Table 1, or may be a shortcut button obtained subsequently according to a correspondence updated according to the use habit of the user in the first scenario. It may be understood that, the preset correspondence may be a shortcut button that is most frequently used in a preset scenario and that is obtained through calculation based on big data. Therefore, the shortcut button obtained based on the preset correspondence has an association with the preset scenario, and is a shortcut button that conforms to a use habit of the user in the preset scenario. This is not limited in this embodiment of this application.

S2002. In a second scenario, in response to the first operation, display the interface of the control center, and display one or more second buttons in the target area, where the second scenario is different from the first scenario, and the one or more second buttons include: a shortcut button that conforms to a use habit of the user in the second scenario among the plurality of shortcut buttons.

The second operation may correspond to an operation of sliding down from the top of the screen, and the interface of the control center may correspond to interfaces displaying a plurality of shortcut buttons in FIG. 4A, FIG. 4B, and FIG. 4C to FIG. 11. The second scenario may be a preset scenario in Table 1, for example, a low-battery scenario, an airport scenario, a dark-light scenario, a sleep scenario, a long video scenario, a short video scenario, a long read scenario, a short read scenario, a conference scenario, a family scenario, a company scenario, and a calculator scenario. The one or more second buttons may be shortcut buttons corresponding to the preset scenario in Table 1. The first scenario is different from the second scenario. For example, the second scenario is the dark-light scenario, and the second button is a flashlight button, a dark mode button, and/or an eye protection mode button.

It may be learned by comparing the first scenario with the second scenario that in different preset scenarios, the electronic device may display shortcut buttons corresponding to the preset scenarios in a third menu area. In this way, the electronic device may recommend display of a shortcut button in the third menu area of the interface of the control center according to a scenario, and the association between the shortcut buttons and the preset scenarios is strong, and the use habits of the users are met; and in the preset scenario, the user has a relatively high probability of using the shortcut button, thereby improving utilization of the shortcut button in the third menu area, simplifying user operations, and improving user experience.

Optionally, the shortcut button that conforms to the use habit of the user in the first scenario among the plurality of shortcut buttons includes at least one of the following: a shortcut button that is preset in the electronic device and that corresponds to the first scenario; a shortcut button whose use frequency in the first scenario is highest among the plurality of shortcut buttons; a shortcut button whose use duration in the first scenario is longest among the plurality of shortcut buttons; and/or, a shortcut button whose use frequency in a preset time in the first scenario is greater than a frequency threshold among the plurality of shortcut buttons.

It may be understood that, in a preset scenario, if the electronic device obtains less data of using the shortcut button by the user, the electronic device may not learn the shortcut button for the use habit of the user in the first scenario. In this case, when an operation for displaying an interface of the control center is received in the preset scenario, the electronic device may display, for example, the preset shortcut button shown in Table 1 and corresponding to the preset scenario in the third menu area. The preset shortcut button may be a shortcut button that is obtained based on big data and that has a relatively strong association with a scenario, and may also conform to a use habit of the user in the preset scenario.

Alternatively, the electronic device may update the correspondence between a preset scenario and a shortcut button according to use data of the user, and an update determining method may be: setting a shortcut button with a highest use frequency in a preset scenario as the shortcut button corresponding to the preset scenario; setting a shortcut button with a longest use duration in a preset scenario as the shortcut button corresponding to the preset scenario; and/or, setting, in a preset scenario, a shortcut button whose use frequency in a preset time is greater than a frequency threshold as the shortcut button corresponding to the preset scenario. The use frequency may be obtained by collecting statistics based on an operation that the user clicks a shortcut button on the interface of the control center; or may be obtained by collecting statistics based on an operation that the user clicks a shortcut button on the setting interface, or may be obtained by collecting statistics based on an operation that the user clicks a shortcut button on the interface of the control center and the setting interface.

In this way, in a preset scenario, the electronic device may display, in the third menu area, a shortcut button conforming to the use habit of the user in the preset scenario, where an association between the preset scenario and the shortcut button is strong, and a probability that the user uses the shortcut function in the preset scenario is relatively high, thereby improving utilization of the shortcut button in the third menu area. In addition, the electronic device may continuously update, based on the use habit of the user, the shortcut button corresponding to the preset scenario, to better conform to the use habit of the user, and further improve utilization of the shortcut button in the third menu area, thereby improving user experience.

Optionally, the method further includes: in the first scenario and the second scenario, in response to the first operation, displaying the interface of the control center, and displaying one or more third buttons in the target area, where the third button includes: one or more shortcut buttons whose use frequency is highest and that are obtained by sorting a use frequency of the first button in the first scenario and a use frequency of the second button in the second scenario together.

When the electronic device is in a plurality of preset scenarios, the electronic device may sort use frequencies of shortcut buttons corresponding to the plurality of preset scenarios, and preferentially display a shortcut button with a high use frequency. For example, in the scenarios shown in FIG. 16, the first scenario may be a dark-light scenario, and the second scenario may be an airport scenario. The electronic device may sort the use frequencies of the flashlight button and the eye protection mode button in the dark-light scenario, and the use frequency of the airplane mode button in the airport scenario together. For example, if the sorting result of the use frequencies is that the airplane mode button > the flashlight button > the eye protection mode, the electronic device preferentially displays the airplane mode button 1603 and the flashlight button 1604 in the third menu area, as shown in the interface in b of FIG. 16. The third buttons are, for example, an airplane mode button and a flashlight button.

In this way, when there is a conflict between preset scenarios in which the electronic device is located, the electronic device may filter out one or more shortcut buttons having highest use probabilities from a plurality of current scenarios according to a comprehensive ranking of the use frequencies of the shortcut buttons in the respective preset scenarios, thereby ensuring utilization of the shortcut button in the third menu area in the preset scenarios.

Optionally, the first scenario includes any one of a low-battery scenario, an airport scenario, a dark-light scenario, a sleep scenario, a video scenario, a read scenario, a conference scenario, a family scenario, a company scenario, and a calculator scenario.

In this way, in the foregoing preset scenario, the electronic device may provide a corresponding shortcut button according to the preset scenario. The use habit of the user is learned in detail through a scenario, so as to obtain a shortcut button that better conforms to the use habit of the user.

Optionally, the method further includes: in a first time period, in response to the first operation, displaying the interface of the control center, and displaying one or more fourth buttons in the target area, where the electronic device is not in any one of the low-battery scenario, the airport scenario, the dark-light scenario, the sleep scenario, the video scenario, the read scenario, the conference scenario, the family scenario, the company scenario, and the calculator scenario; and the one or more fourth buttons include: a shortcut button that conforms to a use habit of the user in the first time period among the plurality of shortcut buttons; and in a second time period, in response to the first operation, displaying the interface of the control center, and displaying one or more fifth buttons in the target area, where the electronic device is not in any one of the low-battery scenario, the airport scenario, the dark-light scenario, the sleep scenario, the video scenario, the read scenario, the conference scenario, the family scenario, the company scenario, and the calculator scenario; and the first time period is different from the second time period; and the one or more fifth buttons include: a shortcut button that conforms to a use habit of the user in the second time period among the plurality of shortcut buttons.

It may be understood that, when the electronic device does not detect any preset scenario, the electronic device may perform, according to a time dimension, detailed learning on a habit of the user for using a shortcut button. For example, the first time period may be 8:00-9:00. If the electronic device does not detect any preset scenario between 8:00 and 9:00, the electronic device makes a recommendation according to a previous habit of the user for using a shortcut button between 8:00 and 9:00. As shown in the interface in a of FIG. 13, shortcut buttons frequently used by the user between 8:00 and 9:00 are the screenshot button 1301 and the eye protection mode button 1302. The fourth buttons may be, for example, a screenshot button and an eye protection mode button. For example, the second time period may be 9:00-12:00. If the electronic device does not detect any preset scenario between 9:00 and 12:00, the electronic device makes a recommendation according to a previous habit of the user for using a shortcut button between 9:00 and 12:00. As shown in the interface in b of FIG. 13, shortcut buttons frequently used by the user between 9:00 and 12:00 are the mute button 1303 and the do-not-disturb mode button 1304. The fifth buttons may be, for example, a mute button and a do-not-disturb mode button.

It may be learned by comparing the first time period with the second time period that in different time periods, the electronic device may learn shortcut buttons of different correspondences. In this way, when the electronic device cannot recommend a shortcut button according to a preset scenario, the electronic device may recommend a shortcut button according to a time dimension, and can still learn the use habit of the user for shortcut buttons in detail, so as to provide, in the third menu area, a shortcut button better conforming to the use habit of the user, thereby improving utilization of the third menu area.

Optionally, the method further includes: in a third time period, in response to the first operation, displaying the interface of the control center, and displaying one or more sixth buttons in the target area, where the electronic device is not in any one of the low-battery scenario, the airport scenario, the dark-light scenario, the sleep scenario, the video scenario, the read scenario, the conference scenario, the family scenario, the company scenario, and the calculator scenario; and the third time period is different from both the second time period and the first time period; and the one or more fifth buttons include: a screenshot button and/or a screen recording button.

The third time period may be, for example, a time period in which a use habit of the user is not learned. For example, between 14:00 and 16:00, the frequency with which the user uses a shortcut button of the electronic device is relatively small, and the electronic device does not learn a shortcut button frequently used by the user in this time period. In this case, when the electronic device does not detect any preset scenario, and the electronic device displays the interface of the control center, a fifth button may be displayed in the third menu area, and the fifth button may be a gadget button, for example, the interface shown in FIG. 15.

It may be understood that, when the electronic device cannot obtain a use habit of the user for the shortcut button according to a scenario and time, the electronic device may preferentially display some buttons that are little associated with a scenario and have a relatively wide range of use scenarios, for example, a screenshot button and a screen recording button. In this way, when there is no preset scenario or there is no use habit of the user in a current time period, the electronic device may provide a gadget button with a relatively wide range of use scenarios, thereby improving utilization of the shortcut button in the third menu area.

Optionally, the method further includes: in a third scenario, in response to the first operation, displaying the interface of the control center, and displaying a seventh button and an eighth button in the target area, and displaying the seventh button and a ninth button in a first area of the interface, where the third scenario is different from both the first scenario and the second scenario, and the seventh button and the eighth button each include: a shortcut button that conforms to a use habit of the user in the third scenario among the plurality of shortcut buttons; and displaying the interface of the control center in response to an operation on the ninth button, where a plurality of rows of shortcut buttons are displayed in the first area, and shortcut buttons in a first row include the seventh button; and shortcut buttons from the first row to an N^{th} row include the eighth button, where N is a positive integer greater than 0.

The third scenario may be, for example, the low-battery scenario, the seventh button may be, for example, the low-battery mode button 402, the eighth button may be, for example, the screenshot button 403, the first area may be, for example, the second menu area, and the ninth button may be, for example, the more button 401. In the interface shown in FIG. 4A, the third menu area displays the low-battery mode button 402 and the screenshot button 403; and the second menu area displays the screenshot button and the more button 401. After the more button 401 is clicked, the electronic device displays the interface shown in FIG. 4B. The shortcut button in the first row of the second menu area remains unchanged. For example, the screenshot button is displayed in the second menu area, and the low-battery button is displayed in the interface shown in FIG. 4B or the interface shown in FIG. 4C.

In this way, a plurality of manners of enabling a button are provided. For example, the user may use a shortcut button in the second menu area, and may also use a shortcut button in the third menu area, thereby enriching manners of using a shortcut button and improving user experience.

Optionally, the method includes: in the low-battery scenario, in response to the first operation, displaying the interface of the control center, and displaying a tenth button in the target area, where the tenth button includes a low-battery mode button, where the low-battery scenario includes: a scenario in which a battery level of the electronic device is less than a battery level threshold.

The low-battery mode button has a correspondence with the low-battery scenario. In the low-battery scenario, the third menu area may display the low-battery button, and the interface of the control center may be shown in FIG. 4A, FIG. 4B, and FIG. 4C.

It may be understood that, the tenth button may alternatively be another button. For example, after the electronic device updates the low-battery scenario and the shortcut button, the tenth button may be a shortcut button corresponding to the updated low-battery scenario.

In this way, when the electronic device is in the low-battery scenario, the electronic device may recommend a corresponding shortcut button in the third menu area, to improve utilization of the shortcut button in the third menu area in the low-battery scenario.

Optionally, the method includes: in the airport scenario, in response to the first operation, displaying the interface of the control center, and displaying an eleventh button in the target area, where the eleventh button includes an airplane mode button, where the airport scenario includes: a scenario in which the electronic device enters an airport geofence, and/or a scenario determined by the electronic device based on flight information of the user.

The airplane mode button has a correspondence with the airport scenario. In the airport scenario, the airplane mode button may be displayed in the third menu area, and the interface of the control center may be shown in FIG. 5.

It may be understood that, the eleventh button may alternatively be another button. For example, after the electronic device updates the airport scenario and the shortcut button, the eleventh button may be a shortcut button corresponding to the updated airport scenario.

In this way, when the electronic device is in the airport scenario, the electronic device may recommend a corresponding shortcut button in the third menu area, to improve utilization of the shortcut button in the third menu area in the airport scenario.

Optionally, the method includes: in the dark-light scenario, in response to the first operation, displaying the interface of the control center, and displaying a twelfth button in the target area, where the twelfth button includes a flashlight button, a dark mode button, and/or an eye protection mode button, where the dark-light scenario includes: a scenario in which a luminance of the electronic device is less than a luminance threshold.

The flashlight button, the dark mode button, and/or the eye protection mode button have a correspondence with the dark-light scenario. In the dark-light scenario, the third menu area may display the flashlight button, the dark mode button, and/or the eye protection mode button. The interface of the control center may be shown in FIG. 6A, FIG. 6B, and FIG. 6C.

It may be understood that, the twelfth button may alternatively be another button. For example, after the electronic device updates the dark-light scenario and the shortcut button, the twelfth button may be a shortcut button corresponding to the updated dark-light scenario.

In this way, when the electronic device is in the dark-light scenario, the electronic device may recommend a corresponding shortcut button in the third menu area, to improve utilization of the shortcut button in the third menu area in the dark-light scenario.

Optionally, the method includes: in the sleep scenario, in response to the first operation, displaying the interface of the control center, and displaying a thirteenth button in the target area, where the thirteenth button includes a dark mode button, a do-not-disturb button, and/or an airplane mode button.

The dark mode button, the do-not-disturb button, and/or the airplane mode button have a correspondence with the sleep scenario. In the sleep scenario, the third menu area may display the dark mode button, the do-not-disturb button, and/or the airplane mode button. The interface of the control center may be shown in FIG. 7A, FIG. 7B, and FIG. 7C.

It may be understood that, the thirteenth button may alternatively be another button. For example, after the electronic device updates the sleep scenario and the shortcut button, the thirteenth button may be a shortcut button corresponding to the updated sleep scenario.

In this way, when the electronic device is in the sleep scenario, the electronic device may recommend a corresponding shortcut button in the third menu area, to improve utilization of the shortcut button in the third menu area in the sleep scenario.

Optionally, the video scenario includes a first video scenario and a second video scenario, and the first video scenario includes a scenario in which the electronic device runs a first-type video application; the second video scenario includes a scenario in which the electronic device runs a second-type video application; and an average playback duration of a video in the first-type video application is greater than an average playback duration of a video in the second-type video application, and the method includes: in the first video scenario, in response to the first operation, displaying the interface of the control center, and displaying a fourteenth button in the target area, where the fourteenth button includes an auto-rotation button, an AI subtitle button, a screenshot button, a screen recording button, and/or a screen projection button; and in the second video scenario, in response to the first operation, displaying the interface of the control center, and displaying a fifteenth button in the target area, where the fifteenth button includes an AI subtitle button, a screenshot button, and/or a screen recording button.

The first video scenario may correspond to a long video scenario, the first-type video application may be a long video application, the second video scenario may correspond to a short video scenario, and the second-type video application may be a short video application.

The auto-rotation button, the AI subtitle button, the screenshot button, the screen recording button, and/or the screen projection button may correspond to the long video scenario. For example, the interface of the control center may be shown in FIG. 8A, FIG. 8B, and FIG. 8C. The AI subtitle button, the screenshot button, and/or the screen recording button may correspond to the short video scenario.

It may be understood that, the fourteenth button and the fifteenth button may alternatively be other buttons. For example, after the electronic device updates the video scenario and the shortcut button, the fourteenth button and the fifteenth button may be shortcut buttons corresponding to the updated video scenario.

In this way, when the electronic device is in the video scenario, the electronic device may recommend a corresponding shortcut button in the third menu area, to improve utilization of the shortcut button in the third menu area in the video scenario.

Optionally, the read scenario includes a first read scenario and a second read scenario, and the first read scenario includes a scenario in which the electronic device runs a first-type read application; the second read scenario includes a scenario in which the electronic device runs a second-type read application; and an average article length of the first-type read application is greater than an average article length of read in the second-type read application, and the method includes: in the first read scenario, in response to the first operation, displaying the interface of the control center, and displaying a sixteenth button in the target area, where the sixteenth button includes an ebook mode button and/or a select-to-speak button; and in the second read scenario, in response to the first operation, displaying the interface of the control center, and displaying a seventeenth button in the target area, where the seventeenth button includes a select-to-speak button.

The first read scenario may correspond to a long read scenario, the first-type read application may be a long read application, the second read scenario may correspond to a short read scenario, and the second-type read application may be a short read application.

The ebook mode button and/or the select-to-speak button may correspond to the long read scenario. For example, the interface of the control center may be shown in FIG. 9A, FIG. 9B, and FIG. 9C. The select-to-speak button may correspond to the short read scenario.

It may be understood that, the sixteenth button and the seventeenth button may alternatively be other buttons. For example, after the electronic device updates the read scenario and the shortcut button, the sixteenth button and the seventeenth button may be shortcut buttons corresponding to the updated read scenario.

In this way, when the electronic device is in the read scenario, the electronic device may recommend a corresponding shortcut button in the third menu area, to improve utilization of the shortcut button in the third menu area in the read scenario.

Optionally, the method includes: in the conference scenario, in response to the first operation, displaying the interface of the control center, and displaying an eighteenth button in the target area, where the eighteenth button includes an AI subtitle button, a screenshot button, a screen recording button, and/or a screen projection button, where the conference scenario includes: a scenario in which the electronic device runs a conference application.

The AI subtitle button, the screenshot button, the screen recording button, and/or the screen projection button may correspond to the conference scenario. For example, the interface of the control center may be shown in FIG. 10.

It may be understood that, the eighteenth button may alternatively be another button. For example, after the electronic device updates the conference scenario and the shortcut button, the eighteenth button may be a shortcut button corresponding to the updated conference scenario.

In this way, when the electronic device is in the conference scenario, the electronic device may recommend a corresponding shortcut button in the third menu area, to improve utilization of the shortcut button in the third menu area in the conference scenario.

Optionally, the method includes: in the family scenario, in response to the first operation, displaying the interface of the control center, and displaying one or more nineteenth buttons in the target area, where the one or more nineteenth buttons include: a shortcut button that conforms to a use habit of the user in the family scenario among the plurality of shortcut buttons; and in the company scenario, in response to the first operation, displaying the interface of the control center, and displaying one or more twentieth buttons in the target area, where the one or more twentieth buttons include: a shortcut button that conforms to a use habit of the user in the company scenario among the plurality of shortcut buttons.

The electronic device may distinguish scenarios, for example, a family scenario and a conference scenario, according to geographic locations. The electronic device may learn habits of using shortcut buttons by the user when the user is at different locations, and establish a correspondence between scenarios and shortcut buttons. For example, using a company scenario as an example, the user often uses a mute button and a screen recording button in a company, the twentieth buttons may be the mute button and the screen recording button, and an interface of the control center may correspond to the interface shown in FIG. 11.

In this way, when the electronic device is in the family and/or company scenario, the electronic device may recommend a corresponding shortcut button in the third menu area, to improve utilization of the shortcut button in the third menu area in the family and/or company scenario.

Optionally, the method includes: in the calculator scenario, in response to the first operation, displaying the interface of the control center, and displaying a twenty-first button in the target area, where the twenty-first button includes an auto-rotation button, where the calculator scenario includes: a scenario in which the electronic device runs a calculator application and a state of the auto-rotation button is an off state.

The auto-rotation button may correspond to the calculator scenario.

In this way, when the electronic device is in the calculator scenario, the electronic device may recommend a corresponding shortcut button in the third menu area, to improve utilization of the shortcut button in the third menu area in the calculator scenario.

Optionally, the method further includes: in a fourth scenario, in response to the first operation, displaying the interface of the control center, and displaying one or more twenty-second buttons in the target area, where the twenty-second button is a shortcut button that is preset in the electronic device and that corresponds to the fourth scenario; and a use frequency of any shortcut button in the fourth scenario is less than or equal to the frequency threshold; and in the fourth scenario, in response to the first operation, displaying the interface of the control center, and displaying one or more twenty-third buttons in the target area, where the twenty-third button is a shortcut button whose use frequency in a preset time in the fourth scenario is greater than the frequency threshold among the plurality of shortcut buttons; and the twenty-third button is different from the twenty-second button, and the fourth scenario is different from the third scenario.

It may be understood that, in this embodiment of this application, when recognizing a preset scenario, the electronic device may recommend a shortcut button corresponding to the preset scenario in the third menu area. In some embodiments, the third menu area may display a preset shortcut button, for example, as shown in Table 1. In some other embodiments, the electronic device may update the shortcut button corresponding to the preset scenario.

Using a dark-light scenario as an example, the fourth scenario that is recognized for the first time may correspond to the interface shown in a of FIG. 12, and the twenty-second buttons may correspond to the flashlight button 1201 and the eye protection mode button 1202. The two buttons may be preset shortcut buttons in Table 1.

After a period of time, the electronic device may learn a habit of using the mute button by the user in the dark-light scenario. In this case, it is recognized that the fourth scenario may correspond to the interface shown in c of FIG. 12, and the twenty-third button may correspond to the mute button 1203. The mute button 1302 may be a shortcut button whose use frequency in a preset time is greater than a frequency threshold in the dark-light scenario.

In this way, the electronic device may constantly update a correspondence between a preset scenario and a shortcut button by learning the use habit of the user for the shortcut button, so that the shortcut button better conforms to the use habit of the user, thereby improving user experience.

The display method for an interface of a control center in the embodiments of this application is described above. An apparatus for performing the display method for an interface of a control center provided in the embodiments of this application is described below. It may be understood by a person skilled in the art that the method and the apparatus may be combined and mutual reference may be made, and that a related apparatus provided in embodiments of this application may perform the steps of the foregoing display method for an interface of a control center.

As shown in FIG. 21, a display apparatus 2100 for an interface of a control center may be used in a communication device, a circuit, a hardware component, or a chip, and the display apparatus for an interface of a control center includes: a display unit 2101 and a processing unit 2102. The display unit 2101 is configured to support the display apparatus 2100 for an interface of a control center in performing a display step. The processing unit 2102 is configured to support the display apparatus 2100 for an interface of a control center in performing an information processing step.

In a possible implementation, the display apparatus 2100 for an interface of a control center may also include a communication unit 2103. Specifically, the communication unit is configured to support the display apparatus 2100 for an interface of a control center in performing a data sending step and a data receiving step. The communication unit 2103 may be an input/output interface, a pin, a circuit, or the like.

In a possible embodiment, the display apparatus for an interface of a control center may further include a storage unit 2104. The processing unit 2102 and the storage unit 2104 are connected to each other by using a line. The storage unit 2104 may include one or more memories. The memory may be a component in one or more devices or circuits that is configured to store a program or data. The storage unit 2104 may exist independently, and is connected to the processing unit 2102 included by the display apparatus for an interface of a control center through a communication line. Alternatively, the storage unit 2104 may be integrated together with the processing unit 2102.

The storage unit 2104 may store computer-executable instructions of the method in the terminal device, so that the processing unit 2102 performs the method in the foregoing embodiments. The storage unit 2104 may be a register, a cache, a RAM, or the like, and the storage unit 2104 may be integrated together with the processing unit 2102. The storage unit 2104 may be a read-only memory (read-only memory, ROM) or another type of static storage device that may store static information and instructions, and the storage unit 2104 may be independent of the processing unit 2102.

The display method for an interface of a control center provided in embodiments of this application may be applied to an electronic device having a communication function. The electronic device includes a terminal device. For a specific device form and the like of the terminal device, reference may be made to the foregoing related descriptions. Details are not described herein again.

An embodiment of this application provides a terminal device. The terminal device includes: includes: a processor and a memory, where the memory stores computer-executable instructions; and the processor executes the computer-executable instructions stored in the memory to enable the terminal device to perform the foregoing method.

An embodiment of this application provides a chip system. The chip system includes at least one processor and a communication interface, where the communication interface is interconnected to the at least one processor by using a line, and the at least one processor is configured to run a computer program or an instruction, to perform the foregoing method. The implementation principles and technical effects thereof are similar to those in the foregoing related embodiments. Details are not described herein again.

An embodiment of this application further provides a computer-readable storage medium. The computer-readable storage medium stores a computer program. The foregoing method is implemented when the computer program is executed by a processor. The method described in the foregoing embodiments may be completely or partially implemented by using software, hardware, firmware, or any combination thereof. If implemented in software, a function may be stored on a computer-readable medium or transferred on the computer-readable medium as one or more instructions or code. The computer-readable medium may include a computer storage medium and a communication medium, and may further include any medium that enables a computer program to be transferred from one place to another place. The storage medium may be any target medium accessible to a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is used to carry required program code in a form of instructions or a data structure and that can be accessed by a computer. Moreover, any connection is appropriately referred to as a computer-readable medium. For example, if software is transferred from a website, a server, or another remote source through a coaxial cable, an optical fiber cable, a twisted pair, a digital subscriber line (Digital Subscriber Line, DSL) or wireless technologies (such as infrared, radio, and microwave), the coaxial cable, the optical fiber cable, the twisted pair, the DSL, or the wireless technologies such as the infrared, the radio, and the microwave are included in the definition of the medium. The magnetic disk and the optical disc used herein include a compact disc, a laser disc, an optical disc, a digital versatile disc (Digital Versatile Disc, DVD), a floppy disk, and a Blu-ray disc. The magnetic disk generally reproduces data in a magnetic manner, and the optical disc reproduces data optically by using a laser. A combination of the foregoing should also be included in the scope of the computer-readable medium.

An embodiment of this application provides a computer program product. The computer program product includes a computer program. The computer program, when executed, causes a computer to perform the foregoing method.

The embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processing unit of any other programmable device to generate a machine, so that the instructions executed by a computer or a processing unit of any other programmable data processing device generate an apparatus for implementing a specific function in one or more processes in the flowcharts and/or in one or more blocks in the block diagrams.

In the foregoing specific implementations, the objectives, technical solutions, and beneficial effects of the present invention are further described in detail. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A display method for an interface of a control center, applied to an electronic device, wherein the method comprises:
in a first scenario, in response to a first operation, displaying an interface of a control center, and displaying one or more first buttons in a target area of the interface, wherein the control center is configured to manage a plurality of shortcut buttons, the interface of the control center is provided to display some shortcut buttons of the plurality of shortcut buttons, and the one or more first buttons comprise: a shortcut button that conforms to a use habit of a user in the first scenario among the plurality of shortcut buttons; and
in a second scenario, in response to the first operation, displaying the interface of the control center, and displaying one or more second buttons in the target area, wherein the second scenario is different from the first scenario, and the one or more second buttons comprise: a shortcut button that conforms to a use habit of the user in the second scenario among the plurality of shortcut buttons.

2. The method according to claim 1, wherein the shortcut button that conforms to the use habit of the user in the first scenario among the plurality of shortcut buttons comprises at least one of the following: a shortcut button that is preset in the electronic device and that corresponds to the first scenario; a shortcut button whose use frequency in the first scenario is highest among the plurality of shortcut buttons; and/or, a shortcut button whose use frequency in a preset time in the first scenario is greater than a frequency threshold among the plurality of shortcut buttons.

3. The method according to claim 1 or 2, wherein the method further comprises:
in the first scenario and the second scenario, in response to the first operation, displaying the interface of the control center, and displaying one or more third buttons in the target area, wherein the third button comprises: one or more shortcut buttons whose use frequency is highest and that are obtained by sorting a use frequency of the first button in the first scenario and a use frequency of the second button in the second scenario together.

4. The method according to any one of claims 1 to 3, wherein the first scenario comprises any one of a low-battery scenario, an airport scenario, a dark-light scenario, a sleep scenario, a video scenario, a read scenario, a conference scenario, a family scenario, a company scenario, and a calculator scenario.

5. The method according to any one of claims 1 to 4, further comprising:
in a first time period, in response to the first operation, displaying the interface of the control center, and displaying one or more fourth buttons in the target area, wherein the electronic device is not in any one of the low-battery scenario, the airport scenario, the dark-light scenario, the sleep scenario, the video scenario, the read scenario, the conference scenario, the family scenario, the company scenario, and the calculator scenario; and the one or more fourth buttons comprise: a shortcut button that conforms to a use habit of the user in the first time period among the plurality of shortcut buttons; and
in a second time period, in response to the first operation, displaying the interface of the control center, and displaying one or more fifth buttons in the target area, wherein the electronic device is not in any one of the low-battery scenario, the airport scenario, the dark-light scenario, the sleep scenario, the video scenario, the read scenario, the conference scenario, the family scenario, the company scenario, and the calculator scenario; and the first time period is different from the second time period; and the one or more fifth buttons comprise: a shortcut button that conforms to a use habit of the user in the second time period among the plurality of shortcut buttons.

6. The method according to any one of claims 1 to 5, further comprising:
in a third time period, in response to the first operation, displaying the interface of the control center, and displaying one or more sixth buttons in the target area, wherein the electronic device is not in any one of the low-battery scenario, the airport scenario, the dark-light scenario, the sleep scenario, the video scenario, the read scenario, the conference scenario, the family scenario, the company scenario, and the calculator scenario; and the third time period is different from both the second time period and the first time period; and the one or more fifth buttons comprise: a screenshot button and/or a screen recording button.

7. The method according to any one of claims 1 to 6, further comprising:
in a third scenario, in response to the first operation, displaying the interface of the control center, and displaying a seventh button and an eighth button in the target area, and displaying the seventh button and a ninth button in a first area of the interface, wherein the third scenario is different from both the first scenario and the second scenario, and the seventh button and the eighth button each comprise: a shortcut button that conforms to a use habit of the user in the third scenario among the plurality of shortcut buttons; and
displaying the interface of the control center in response to an operation on the ninth button, wherein a plurality of rows of shortcut buttons are displayed in the first area, and shortcut buttons in a first row comprise the seventh button; and shortcut buttons from the first row to an N^{th} row comprise the eighth button, wherein N is a positive integer greater than 0.

8. The method according to any one of claims 1 to 7, wherein the method comprises:
in the low-battery scenario, in response to the first operation, displaying the interface of the control center, and displaying a tenth button in the target area, wherein the tenth button comprises a low-battery mode button, wherein the low-battery scenario comprises: a scenario in which a battery level of the electronic device is less than a battery level threshold.

9. The method according to any one of claims 1 to 8, wherein the method comprises:
in the airport scenario, in response to the first operation, displaying the interface of the control center, and displaying an eleventh button in the target area, wherein the eleventh button comprises an airplane mode button, wherein the airport scenario comprises: a scenario in which the electronic device enters an airport geofence, and/or a scenario determined by the electronic device based on flight information of the user.

10. The method according to any one of claims 1 to 9, wherein the method comprises:
in the dark-light scenario, in response to the first operation, displaying the interface of the control center, and displaying a twelfth button in the target area, wherein the twelfth button comprises a flashlight button, a dark mode button, and/or an eye protection mode button, wherein the dark-light scenario comprises: a scenario in which a luminance of the electronic device is less than a luminance threshold.

11. The method according to any one of claims 1 to 10, wherein the method comprises:
in the sleep scenario, in response to the first operation, displaying the interface of the control center, and displaying a thirteenth button in the target area, wherein the thirteenth button comprises a dark mode button, a do-not-disturb button, and/or an airplane mode button.

12. The method according to any one of claims 1 to 11, wherein the video scenario comprises a first video scenario and a second video scenario, and the first video scenario comprises a scenario in which the electronic device runs a first-type video application; the second video scenario comprises a scenario in which the electronic device runs a second-type video application; and an average playback duration of a video in the first-type video application is greater than an average playback duration of a video in the second-type video application, and the method comprises:
in the first video scenario, in response to the first operation, displaying the interface of the control center, and displaying a fourteenth button in the target area, wherein the fourteenth button comprises an auto-rotation button, an AI subtitle button, a screenshot button, a screen recording button, and/or a screen projection button; and
in the second video scenario, in response to the first operation, displaying the interface of the control center, and displaying a fifteenth button in the target area, wherein the fifteenth button comprises an AI subtitle button, a screenshot button, and/or a screen recording button.

13. The method according to any one of claims 1 to 12, wherein the read scenario comprises a first read scenario and a second read scenario, and the first read scenario comprises a scenario in which the electronic device runs a first-type read application; the second read scenario comprises a scenario in which the electronic device runs a second-type read application; and an average article length of the first-type read application is greater than an average article length of read in the second-type read application, and the method comprises:
in the first read scenario, in response to the first operation, displaying the interface of the control center, and displaying a sixteenth button in the target area, wherein the sixteenth button comprises an ebook mode button and/or a select-to-speak button; and
in the second read scenario, in response to the first operation, displaying the interface of the control center, and displaying a seventeenth button in the target area, wherein the seventeenth button comprises a select-to-speak button.

14. The method according to any one of claims 1 to 13, wherein the method comprises:
in the conference scenario, in response to the first operation, displaying the interface of the control center, and displaying an eighteenth button in the target area, wherein the eighteenth button comprises an AI subtitle button, a screenshot button, a screen recording button, and/or a screen projection button, wherein the conference scenario comprises: a scenario in which the electronic device runs a conference application.

15. The method according to any one of claims 1 to 14, wherein the method comprises:
in the family scenario, in response to the first operation, displaying the interface of the control center, and displaying one or more nineteenth buttons in the target area, wherein the one or more nineteenth buttons comprise: a shortcut button that conforms to a use habit of the user in the family scenario among the plurality of shortcut buttons; and
in the company scenario, in response to the first operation, displaying the interface of the control center, and displaying one or more twentieth buttons in the target area, wherein the one or more twentieth buttons comprise: a shortcut button that conforms to a use habit of the user in the company scenario among the plurality of shortcut buttons.

16. The method according to any one of claims 1 to 15, wherein the method comprises:
in the calculator scenario, in response to the first operation, displaying the interface of the control center, and displaying a twenty-first button in the target area, wherein the twenty-first button comprises an auto-rotation button, wherein the calculator scenario comprises: a scenario in which the electronic device runs a calculator application and a state of the auto-rotation button is an off state.

17. The method according to any one of claims 1 to 16, wherein the method comprises:
in a fourth scenario, in response to the first operation, displaying the interface of the control center, and displaying one or more twenty-second buttons in the target area, wherein the twenty-second button is a shortcut button that is preset in the electronic device and that corresponds to the fourth scenario; and a use frequency of any shortcut button in the fourth scenario is less than or equal to the frequency threshold; and
in the fourth scenario, in response to the first operation, displaying the interface of the control center, and displaying one or more twenty-third buttons in the target area, wherein the twenty-third button is a shortcut button whose use frequency in a preset time in the fourth scenario is greater than the frequency threshold among the plurality of shortcut buttons; and the twenty-third button is different from the twenty-second button, and the fourth scenario is different from the third scenario.

18. An electronic device, comprising: a processor and a memory, wherein
the memory stores computer-executable instructions; and
the processor executes the computer-executable instructions stored in the memory, to cause the electronic device to perform the method according to any one of claims 1 to 17.

19. A computer-readable storage medium, wherein the computer-readable storage medium stores a computer program, and when the computer program is executed by a processor, the method according to any one of claims 1 to 17 is implemented.

20. A chip system, comprising at least one processor and a communication interface, wherein the communication interface is interconnected to the at least one processor by using a line, and the at least one processor is configured to run a computer program or an instruction, to perform the method according to any one of claims 1 to 17.

21. A computer program product, comprising a computer program, wherein when the computer program is run, a computer is enabled to perform the method according to any one of claims 1 to 17.
